# EUROPEAN PATENT SPECIFICATION

(11) **EP 3 115 858 B1**
(45) Date of publication and mention of the grant of the patent: **27.11.2019**
(21) Application number: 14885033.2
(22) Date of filing: 16.06.2014
(51) Int. Cl.: G05B 19/418, G05D 1/10, H02G 1/02, B64C 39/02

(54) **CENTRALIZED MONITORING SYSTEM AND MONITORING METHOD FOR UNMANNED AERIAL VEHICLE TO PATROL POWER TRANSMISSION LINE**
ZENTRALES ÜBERWACHUNGSSYSTEM UND ÜBERWACHUNGSVERFAHREN FÜR UNBEMANNTES LUFTFAHRZEUG ZUM ABFLIEGEN EINER ENERGIEÜBERTRAGUNGSLEITUNG
SYSTÈME DE SURVEILLANCE CENTRALISÉE ET PROCÉDÉ DE SURVEILLANCE POUR VÉHICULE AÉRIEN SANS PILOTE À UNE LIGNE DE TRANSMISSION DE PUISSANCE DE PATROUILLE

(30) Priority: 07.03.2014 CN 201410084493
(43) Date of publication of application: 11.01.2017
(73) Proprietor: State Grid Corporation of China (SGCC), Beijing 100031 (CN); Electric Power Research Institute of State Grid Shandong Electric Power Company, Shandong 250002 (CN); Shandong Luneng Intelligence Technology Co., Ltd, Ji'nan, Shandong 250101 (CN)
(72) Inventor: DONG, Gang, Jinan Shandong 250101 (CN); ZHANG, Fangzheng, Jinan Shandong 250101 (CN); WANG, Binhai, Jinan Shandong 250101 (CN); ZHANG, Mingjiang, Jinan Shandong 250101 (CN); LIU, Liang, Jinan Shandong 250101 (CN); ZHANG, Jingjing, Jinan Shandong 250101 (CN); MU, Shiyou, Jinan Shandong 250101 (CN); REN, Jie, Jinan Shandong 250101 (CN); ZHEGN, Tianru, Jinan Shandong 250101 (CN); WANG, Wanguo, Jinan Shandong 250101 (CN); WEI, Chuanhu, Jinan Shandong 250101 (CN)
(74) Representative: ZHAOffice SPRL
(86) International application number: PCT/CN2014/079927
(87) International publication number: WO 2015/131462

(56) References cited:
- EP-A1- 1 548 908
- EP-A1- 2 477 107
- EP-A1- 2 495 166
- CN-A- 102 546 689
- CN-A- 103 812 052
- CN-A- 103 823 449
- CN-A- 103 941 745
- CN-U- 202 534 980
- CN-U- 202 795 060
- US-A1- 2012 250 010

## Description

### Field of the Invention

The present invention belongs to the field of maintenance and overhaul of power system equipment, relates to the field of transmission line inspection of unmanned aerial vehicles, and particularly relates to a monitoring system and monitoring method for transmission line inspection of unmanned aerial vehicles.

### Background of the Invention

Unmanned aerial vehicle line inspection plays an increasingly important role in transmission line inspection. An unmanned aerial vehicle line inspection system can partially replace a line inspection worker and a manned aerial vehicle line inspection system, can inspect a transmission and transformation line at the right time, find faults and hidden troubles of the line in time, and transmit back the onsite condition to a ground control center in time, in order to make right judgments and remove the line faults in time. The workload of power service personnel can be greatly relieved to reduce the probability of personnel risks that may occur, reduce the maintenance cost of power equipment and improve the safety and reliability of a power grid. There is a certain risk for adopting the unmanned aerial vehicle in the transmission line inspection, particularly in the transmission line inspection of mountain areas, plateaus and other areas with harsh natural environments and varied climates. The transmission line inspection of the unmanned aerial vehicle at home and abroad is in a pilot and assessment stage, and operation parameters of unmanned aerial vehicle inspection, especially the flight state information of the unmanned aerial vehicle, the pod state information, the inspection result data of the unmanned aerial vehicle and the like need to be collected and stored at this stage, in order to achieve effective monitoring of the unmanned aerial vehicle inspection. In order to comprehensively assess and analyze the technical economy and reliability of the existing unmanned aerial vehicle line inspection, provide supports for improving the operation management of the unmanned aerial vehicle line inspection and achieve the safe and reliable operation of the unmanned aerial vehicle line inspection, centralized monitoring needs to be carried out on the unmanned aerial vehicle inspection by modern technical means and management methods.

At present, monitoring systems for unmanned aerial vehicle line inspection are few at home, the majority of various provided methods are in the testing stage, and are used for monitoring a single unmanned aerial vehicle instead of carrying out centralized monitoring on a plurality of inspection unmanned aerial vehicles. The monitored objects are generally image data of the unmanned aerial vehicle inspection, the monitoring on the state information of the unmanned aerial vehicle inspection, the pod information and the meteorological information is little, and the informatization and automation degrees on the inspection result data processing are low.

The patent "unmanned aerial vehicle monitoring system for power line inspection" with an application number 201120477071.2 is proposed to carry out real-time video monitoring on the unmanned aerial vehicle by a ground monitoring system. The patent "wireless video monitoring system for unmanned aerial vehicle" with an application number 201120186312.8 is proposed to carry out real-time remote video monitoring on the unmanned aerial vehicle in a WCDMA communication mode. The monitoring means and monitored objects of both the patents are single, and the state information of the unmanned aerial vehicle inspection, particularly the flight state information of the unmanned aerial vehicle, the pod state information, the ground mobile substation station and the like cannot be comprehensively reflected by the video monitoring.

In the patent "real-time positioning and monitoring management system for unmanned aerial vehicles" with an application number 201020519831.7, the GPS positioning information of the unmanned aerial vehicles is uploaded to the monitoring system in real time by wireless communication for positioning and monitoring a plurality of unmanned aerial vehicles. The monitoring of the system is only directed to the GPS information of the unmanned aerial vehicles, so the real-time flight state information of the unmanned aerial vehicles cannot be effectively monitored, and the patent is not applied to a power system.

In the patent "real-time unmanned aerial vehicle line inspection system" with an application number 201010595330.1, the real-time monitoring of unmanned aerial vehicle line inspection data is achieved by a ground control station, and the inspection image information is uploaded to the internet through a 3G channel, so that only remote image monitoring can be achieved, but effective remote monitoring of the state information of the unmanned aerial vehicle, the pod state information and the ground mobile substation information cannot be achieved. The system involved in the patent does not carry out subsequent automatic processing on the inspection result data, and particularly, only one-to-one monitoring can be achieved between the monitoring system and the unmanned aerial vehicle, so the inspection information of a plurality of unmanned aerial vehicles cannot be effectively monitored at the same time.

In the patent application EP 2 495 166 is described:
A monitoring system for transmission line inspection using an unmanned aerial vehicle and comprising a mobile substation and an unmanned aerial vehicle flight platform. The mobile substation is connected with the unmanned aerial vehicle flight platform. The mobile substation is used for planning and releasing a flight task, carrying out local monitoring on the inspection state information and the inspection data, preprocessing inspection image data and carrying out defect pre-diagnosis on the inspection result data. The unmanned aerial vehicle flight platform comprises a pod module serving as a line detection terminal, a flight control module for carrying out flight control on the unmanned aerial vehicle flight platform, a GPS module for carrying out GPS positioning, a communication module for communicating with the mobile substation and an unmanned aerial vehicle airframe; the flight control module, the pod module and the GPS module respectively communicate with the mobile substation through data transmission communication links; and the pod module sends detection image information into the mobile substation through an image transmission communication link. Also in this patent application the monitoring means and monitored objects are single and only one-to-one monitoring can be achieved between the monitoring system and the unmanned aerial vehicle.

In US 2012/250010 an aerial inspection system is disclosed having at least one transmission line, an aerial vehicle, and a detection device coupled to the aerial vehicle. The detection device is configured to detect a condition of the transmission line as the aerial vehicle flies across the transmission line. The aerial vehicle may be in the form of a drone.

In summary, the effects of the existing monitoring methods of the unmanned aerial vehicle inspection are not satisfactory, and there are a lot of problems to be solved.

### Summary of the Invention

The objective of the present invention is to overcome the shortcomings in the prior art and provide a centralized monitoring system and monitoring method for transmission line inspection of unmanned aerial vehicles. In a manner of combining remote centralized monitoring and local monitoring, centralized monitoring is carried out on flight states, pod states, transmission lines, inspection results and other information of more than one accessed unmanned aerial vehicle for line inspection, so as to reinforce the informatization and automation degrees of the unmanned aerial vehicle inspection process and inspection result processing, improve the unmanned aerial vehicle inspection efficiency, and provide technical supports for achieving safe and reliable operation of unmanned aerial vehicle line inspection.

To achieve the above objective, the present invention adopts the following technical solutions.

A centralized monitoring system for transmission line inspection of unmanned aerial vehicles includes a centralized monitoring subsystem, mobile substations and unmanned aerial vehicle flight platforms. The centralized monitoring subsystem is connected with the mobile substations in a one-to-many mode, and the mobile substations are connected with the unmanned aerial vehicle flight platforms in a one-to-one mode.

Wherein, the centralized monitoring subsystem is used for accessing the state information and inspection data of the mobile substation and the unmanned aerial vehicle flight platform, planning and synchronizing an unmanned aerial vehicle inspection task, carrying out real-time remote monitoring on the mobile substation and the unmanned aerial vehicle flight platform for the unmanned aerial vehicle inspection, carrying out defect diagnosis, statistics, analysis and display on the inspection data, and describing a real-time state scene and a power environment of the inspection of the current unmanned aerial vehicle;
wherein, the mobile substation is used for planning and releasing a flight task, carrying out local monitoring on the inspection state information and the inspection data, preprocessing inspection image data and carrying out defect pre-diagnosis on the inspection result data.

Wherein, the unmanned aerial vehicle flight platform includes a pod module serving as a line detection terminal, a flight control module for carrying out flight control on the unmanned aerial vehicle flight platform, a GPS module for carrying out GPS positioning, a communication module for communicating with the mobile substation and an unmanned aerial vehicle airframe. The flight control module, the pod module and the GPS module respectively communicate with the mobile substation through data transmission communication links; and the pod module sends detection image information into the mobile substation through an image transmission communication link. The pod module includes a visible light camera and/or an infrared thermal imaging camera and/or an ultraviolet imaging camera, etc.

The centralized monitoring subsystem includes a human-computer interaction module, an inspection task planning module, an inspection equipment management module, an inspection personnel management module, a GIS module, a transmission line management module, an inspection defect diagnosis module, an inspection report management module, a data storage module, an inspection result management module, a defect elimination module, an inspection task monitoring module and a communication module.

The human-computer interaction module is used for obtaining and analyzing an external command, sending the analyzed external command to a corresponding data processing module for processing, and displaying a corresponding processing result; the human-computer interaction module adopts the current unmanned aerial vehicle manipulation equipment or is selected from a remote controller, a keyboard, a mouse, audio equipment, a display and a multichannel circular-screen stereo projection system, is used for obtaining and analyzing the external command, sending the analyzed external command to the corresponding data processing module, and displaying the processing result in audio, video, image and other modes. The inspection task planning module is used for carrying out task division on a transmission line inspected by the unmanned aerial vehicle, determining the transmission line sections inspected by the inspection machine sets, the necessary inspection equipment and the inspection crew and specifying the planned inspection time and the like according to the reliability of the inspection equipment, the inspection records of the personnel, the inspection geographical environment, the meteorological environment and other influence factors, carrying out query, new construction, edition, audit, notification, release and other operations on the planned inspection task to accomplish the plan of the inspection task; and the inspection task planning module includes an inspection task planning unit, an inspection task management unit and an inspection task information synchronization unit. The inspection task planning unit is connected with the inspection equipment management module, the inspection personnel management module, the GIS module and the transmission line management module, and is used for planning the inspected transmission line, the equipment, the personnel and the unmanned aerial vehicle on a GIS map, and determining the inspected transmission line, the equipment, the personnel and the time and other factors according to the reliability of the equipment, the skill mastery of the personnel, the complexity of the inspection geographical environment, the importance of the line, the seasonal factor, the economical efficiency and other influence factors; the inspection task management unit is connected with the inspection task planning unit and is used for carrying out query, new construction, edition, audit and other managements on the planed inspection task; and the inspection task information synchronization unit is connected with the inspection task management unit and is used for synchronizing the selected unmanned aerial vehicle inspection task information to the corresponding mobile substation.

The inspection task monitoring module is used for monitoring the meteorological environment information of an unmanned aerial vehicle inspection site, the flight state information of the unmanned aerial vehicle, the state information of the mobile substation, the GPS position information, the pod control information and other real-time state information and power environment information, and describing the real-time state scene and the power environment of the current inspection of the unmanned aerial vehicle in video and image modes; and the inspection task monitoring module includes a mobile substation monitoring unit, a flight state monitoring unit, a pod monitoring unit and a meteorological environment monitoring unit, is used for monitoring the real-time state information and the power environment information of the inspection site of the unmanned aerial vehicle, is connected with the communication module and the human-computer interaction module, and is used for describing the real-time state scene and the power environment of the current inspection of the unmanned aerial vehicle in the video and image modes. Wherein, the mobile substation monitoring unit is used for monitoring the GPS information of the mobile substation, recording the motion track of the mobile substation on the GIS map and recording its historical motion tracks; the flight state monitoring unit is used for monitoring the flight GPS coordinates, the speed, the height, the rotating speed, the total distance, the cylinder temperature, the battery voltage, the battery current, the battery power and other state information of the unmanned aerial vehicle; the pod monitoring unit is used for monitoring the flight pod angle, the shooting time, the shooting GPS position information and the like of the unmanned aerial vehicle; and the meteorological environment monitoring unit is used for displaying the temperature, the humidity, the wind speed, the air density (air pressure), the altitude information and other meteorological environment information.

The inspection result management module is used for managing the inspection result data of the unmanned aerial vehicle, is connected with the communication module and the data storage module for achieving synchronization, browse, play, comparison, analysis and report management of the inspection result data, and accomplishing the management of the inspection result data.

The inspection defect diagnosis module is used for carrying out screening, preprocessing and defect diagnosis on the inspection result data that includes image and video information, marking a defect position on an inspection image, illustrating the defect in characters, storing the inspection defect in a database, and carrying out identification, modification, deletion, query, browse and other operations on the corresponding inspection defect image to accomplish the defect diagnosis of the inspection result; the inspection defect diagnosis module includes a defect expert database, a defect diagnosis unit, an image preprocessing unit and a defect management unit, wherein the image preprocessing unit is used for preprocessing the image information, carrying out definition and scene selection accuracy identification on an original inspection image, deleting images with insufficient definition and inaccurate scene selection, and splicing and editing diagnostic images; the defect expert database is used for integrating feature libraries of transmission line defects, is connected with the defect diagnosis unit, and is used for carrying out comparative analysis on a preprocessed image and the defect expert database, analyzing the transmission line defects and identifying corresponding defects on the image in the mode of position identification and character illustration; the defect diagnosis unit is used for storing the diagnosed defects in the data storage module; and the defect management unit is used for achieving identification, modification, deletion, query, browse and the like of the inspection defect image.

The inspection report management module is used for generating an inspection task report of the unmanned aerial vehicle inspection task, describing the transmission line, the equipment, the personnel, the time, the flight task report and the flight log information of the corresponding inspection task and the found defect information, and carrying out browse, edition, deletion, audit and other operations on the inspection report to accomplish the management of the inspection report; and the defect elimination module is used for processing the inspection defect information in the inspection report, triggering a defect elimination flow by the inspected transmission line defects, and carrying out release, allocation, notification, elimination, elimination confirmation and other operations on a defect elimination task to accomplish an elimination operation of the inspection defects found by the unmanned aerial vehicle inspection; and the defect elimination module includes a defect task release unit, a defect task push unit and a defect elimination confirmation unit. The defect task release unit is used for releasing an inspection defect task and can allocate the inspection defect task; the defect task push unit is used for sending the defect task information to operation and maintenance defect elimination personnel of the transmission line section to which the defects belong in a form of a message, a mail and a short message, and the operation and maintenance defect elimination personnel execute a defect elimination task; and the defect elimination confirmation unit is used by the operation and maintenance defect elimination personnel for accomplishing the defect elimination task, and confirming the accomplishment of the defect elimination task after submitting a corresponding defect elimination proof image.

The GIS module is used for importing and exporting transmission line information, the transmission line information is displayed in the GIS module, section division, selection, frame selection and other operations of the transmission line are provided, and the GIS module can be used for browsing, editing and deleting corresponding line information on the GIS map, as well as displaying the flight route information of the unmanned aerial vehicle on the GIS map; and the GIS module includes a GIS line information import and export unit, a line information display unit and a line information maintenance unit. Wherein, the GIS line information import and export unit is used for importing and exporting the transmission line information inspected by the unmanned aerial vehicle in the GIS map, and the import and export format includes, but not limited to, text, XML, CSV, EXCEL, WORD, PDF and other formats; the line information display unit is used for displaying the transmission line information on the GIS map; and the line information maintenance unit is used for browsing, editing and deleting corresponding line information on the GIS map.

The communication module is used for reading the real-time state information of the mobile substation, responding to a remote instruction of the human-computer interaction module, releasing the inspection task information to the mobile substation, obtaining the inspection information of the mobile substation and the unmanned aerial vehicle flight platform in real time, and accomplishing the information interaction and the communication of the centralized monitoring subsystem and the mobile substation; and the communication module can access the mobile substation through a GPRS wireless communication module and read the real-time state information of the mobile substation, and is used for responding to the remote instruction of the human-computer interaction module and obtaining the inspection information of the mobile substation and the unmanned aerial vehicle flight platform in real time. The communication module includes, but not limited to, wireless mobile communication of the current GSM, GPRS, CDMA, WCDMA, TD-SCDMA and LTE communication systems, wifi wireless communication, and local area network and internet communication.

The transmission line management module is used for carrying out import, export, query, browse, deletion, edition and other operations on a tower GPS position, a tower model number, a tower height, a starting tower serial number, tower serial numbers and other information of the transmission line to accomplish the management of the transmission line information; and the transmission line management module includes a line information import and export unit, a line information query unit and a line information maintenance unit. Wherein, the line information import and export unit is used for importing and exporting the tower GPS position, the tower model number, the tower height, the starting tower serial number, the tower serial numbers and other information of the transmission line, and the import and export format includes, but not limited to, text, XML, CSV, EXCEL, word, pdf, etc. The line information query unit can query the transmission line information through the line serial number, the tower position, the tower serial numbers, the GPS position and the like, and can also be connected with the GIS module to query corresponding line information on the GIS map; and the line information maintenance unit is used for browsing, deleting and editing the line information.

The inspection personnel management module is used for carrying out query, maintenance, registration and deletion management on basic personnel information of the inspection crew and an inspection task manager through identity card information, achieving automatic query and display of the personnel information through an identity card reader, and carrying out query, browse, edition and deletion operations on the inspection record information of the inspection crew to accomplish the management of the inspection personnel information; and the inspection personnel management module includes the identity card reader, a personnel information management unit and an inspection record management unit. Wherein, the identity card reader is used for reading the identity card number information of the inspection personnel, and is connected with the personnel information management unit by a serial port; the personnel information management unit is used for carrying on query, maintenance, registration and deletion on the basic information of the inspection personnel, and the personnel information management unit is connected with the identity card reader for achieving automatic query and display of the personnel information; and the inspection record management unit is used for carrying on query, browse, edition and deletion on the inspection records of the inspection personnel.

The inspection equipment management module is used for managing inspection equipment information, carrying out import, export, query, browse, registration, maintenance and deletion operations on the equipment information, maintaining the state information of the inspection equipment, including idle, inspection use, maintenance, servicing or other states, and achieving effective management and use of the inspection equipment; and the inspection equipment management module includes an equipment information import and export unit, an equipment information query unit and an equipment information management unit. Wherein, the equipment information import and export unit is used for importing and exporting the equipment information, and the import and export format includes, but not limited to, text, XML, EXCEL, word, pdf and other formats; the equipment information query unit is used for querying the equipment information, and can query the equipment information by an equipment name, a serial number, a category tree, a fuzzy query and other modes; and the equipment information management unit is used for registering, maintaining and deleting the equipment information.

The data storage module is used for storing system data in a database, a file and other modes, the data storage module is used for storing basic system data of a centralized management subsystem, the inspection process data, the inspection result data, the inspection monitoring data and the like, wherein inspection video data is stored in a file, and a storage file path is stored in the database.

The mobile substation includes a human-computer interaction module, an inspection task synchronization module, a pod control module, a GIS module, a flight control module, a flight task planning module, a defect pre-diagnosis module, an image preprocessing module, a meteorological monitoring module, a flight task monitoring module, a data storage module, a GPS module and a communication module.

The human-computer interaction module is used for obtaining and analyzing an external command, sending the analyzed external command to a corresponding data processing module for processing, displaying a corresponding processing result, inputting and outputting system data, and accomplishing human-system interaction; and the human-computer interaction module adopts the current unmanned aerial vehicle manipulation equipment or is selected from a remote controller, displacement tracking equipment, a motion platform with six degrees of freedom, a keyboard, a mouse, audio equipment, a display and a multichannel circular-screen stereo projection system.

The inspection task synchronization module is used for synchronizing the inspection task information in the centralized monitoring subsystem to the local, carrying out query and state maintenance on the inspection task that is synchronized to the local, setting a current inspection task and carrying out other operations to accomplish the synchronization and the management of the inspection task information; and the inspection task synchronization module includes an inspection task information synchronization unit, an inspection task query unit and a current inspection task setting unit, and is used for synchronizing the inspection task information in the centralized monitoring subsystem to the local. The inspection task information synchronization unit is used for synchronizing the inspection task information; the inspection task query unit is used for querying the inspection task information on the mobile substation; and the current inspection task setting unit is used for setting a current default inspection task.

The pod control module is used for monitoring and controlling a pod on the unmanned aerial vehicle flight platform, reading pod information which includes, but not limited to, the pod angle, the battery power, the battery voltage, the battery current, the shooting time, the shooting GPS value and the like in real time, as well as releasing a control instruction according to the external instruction, controlling the pod angle, executing a shooting action and stopping the shooting action, so as to monitor the pod on the unmanned aerial vehicle flight platform.

The GIS module is used for importing, exporting and displaying the transmission line information of the inspection task, providing frame selection, GPS position positioning and other operations of the GIS map, and providing calibration operation and other operations of a GPS position point on the GIS map. The GIS module includes a GIS line information import unit and a line information display unit. The GIS line information import unit is used for importing the GIS line information, wherein the import file format includes, but not limited to, text, XML, CSV, EXCEL, WORD, PDF and the like; and the line information display unit is used for displaying the transmission line information on the GIS map.

The flight control module is used for monitoring and controlling the state information of the unmanned aerial vehicle flight platform, reading the GPS information, the speed, the height, the rotating speed, the total distance, the cylinder temperature, the battery voltage, the battery current, the battery power and other information of the unmanned aerial vehicle flight platform in real time, and releasing a command to the unmanned aerial vehicle flight platform according to the external instruction to control the unmanned aerial vehicle flight platform. The flight control module includes a flight monitoring unit and a flight control unit. Wherein, the flight monitoring unit is connected with the communication module and is used for monitoring the information of the unmanned aerial vehicle flight platform in real time, and the information includes, but not limited to, the GPS information, the speed, the height, the rotating speed, the total distance, the cylinder temperature, the battery voltage, the battery current, the battery power and the like; and the flight control unit is connected with the communication module and is used for releasing the command to the unmanned aerial vehicle flight platform according to the external instruction to control the unmanned aerial vehicle flight platform.

The flight task planning module is used for planning takeoff/landing points, a suspension point, track points, a corresponding flight height, a flight speed, a line distance and the like of unmanned aerial vehicle inspection on the GIS map according to the transmission line information, the geographical environment information, the meteorological environment information and the like of the unmanned aerial vehicle inspection, generating a corresponding flight route, and carrying out query, browse, deletion, import, export and other operations on the flight task information of the unmanned aerial vehicle to accomplish the management and the plan of the flight task. The flight task planning module includes a flight planning unit, a flight task information import and export unit and a flight task information management unit. Wherein, the flight planning unit is used for planning the takeoff/landing points, the suspension point, the track points, the corresponding flight height, the flight speed, the line distance and the like of inspection unmanned aerial vehicle with the transmission line information, the GIS geographical information, the meteorological information and the like of the inspected line section as constraint factors. The flight task information management unit is used for querying, browsing and deleting the flight task information. The flight task import and export unit can import and export a corresponding flight task file, and the import and export file format includes, but not limited to, a flight task description file, or text, XML, CSV, EXCEL, WORD, BMP, JPEG, GIF, TIFF, TGA, EXIF, etc.

The defect pre-diagnosis module is used for editing and splicing images, screening out images with potential defect possibility, identifying the defect information and the defect position information in image information, and carrying out identification, modification, deletion, query, browse and other operations on the corresponding defect information to accomplish the defect diagnosis and management of the inspection result.

The image preprocessing module is used for preprocessing and managing the inspected image information, carrying out browse, edition, screening and preprocessing operations on the corresponding defect information, screening out images with insufficient shooting definition, inaccurate shooting angle and inaccurate scene selection among shot images, carrying out denoising processing on the images, and adjusting the definition and the contrast of the images to achieve the preprocessing of the image information. The image preprocessing module includes an image browsing unit, an image editing unit, an image screening unit and an image preprocessing unit. Wherein, the image browsing unit is used for browsing the image information; the image editing unit is used for carrying out manual edition and deletion operation on the image; the image screening unit is used for screening out the image information with insufficient definition and accuracy from the image information; and the image preprocessing unit is used for carrying out the denoising processing on the image, and adjusting the definition and the contrast of the image to achieve the preprocessing of the image information.

The meteorological monitoring module is used for monitoring the meteorological information of an inspection site of the unmanned aerial vehicle in real time, and is connected with the flight task monitoring module by a matching interface to send the monitored meteorological information to the centralized monitoring subsystem; the meteorological monitoring module includes, but not limited to, an integrated meteorological monitoring instrument or a temperature sensor, a humidity sensor, a wind speed sensor, an air density (air pressure) sensor, an altitude tester and the like, and is used for monitoring the temperature, the humidity, the wind speed, the air density (air pressure), the altitude information and the like of the inspection site of the unmanned aerial vehicle in real time, and the equipment is connected with the flight task monitoring module by the matching interface.

The flight task monitoring module is used for monitoring the flight state information, the meteorological information of the inspection site, the GPS position information and the like, and displaying the same in the human-computer interaction module; and the flight task monitoring module can also be used for sending the corresponding flight task monitoring information to the centralized monitoring subsystem by the communication module.

The data storage module is used for storing the system data, and storing the basic system data of the centralized management subsystem, the inspection process data, the inspection result data, the inspection monitoring data and the like through the data, wherein the inspection video data is stored in the file, and the storage file path is stored in the database.

The GPS module is used for achieving GPS positioning of the mobile substation, and is connected with the flight task monitoring module through a serial port to send the GPS information of the mobile substation to the centralized monitoring subsystem; and
the communication module is used for realizing the data interaction with the centralized monitoring subsystem, synchronizing the inspection task information from the centralized monitoring subsystem and sending the inspection data and the inspection monitoring data to the centralized monitoring subsystem; and the communication module can also be used for reading the unmanned aerial vehicle state information and the inspection video information of the unmanned aerial vehicle flight platform through a data transmission module and an image transmission module. The communication module includes a wireless communication unit, a wired communication unit, a data transmission unit and an image transmission unit. The wireless communication unit adopts communication modules, including, but not limited to, wireless mobile communication of the current GSM, GPRS, CDMA, WCDMA, TD-SCDMA and LTE communication systems, and wifi wireless communication; the wired communication unit communicates through the Ethernet to achieve information interaction; the data transmission unit achieves the data communication with the unmanned aerial vehicle flight platform through a data transmission radio; and the image transmission unit receives the video information sent by the unmanned aerial vehicle flight platform through an image transmission antenna.

The present invention further provides a centralized monitoring method for transmission line inspection of unmanned aerial vehicles, including three parts: inspection task execution, inspection result processing and inspection task monitoring. The specific flow is as follows:
first step, inspection task allocation: inspection tasks are allocated according to the information of inspected transmission lines and the monitored state information of the mobile substation, a transmission line section, an inspection time, an inspection type, an inspection target and other information corresponding to each inspection task are determined, and inspection personnel and equipment are configured for each inspection task. The monitoring on the state information of the mobile substation in the stage is monitoring the GPS position information of the mobile substation, the integrity of mobile substation equipment, the full extent of crew and the like, so as to allocate the corresponding inspection task.
Second step, inspection task execution: corresponding inspection task information is audited, and the audited inspection task information is released to the corresponding mobile substation to execute the corresponding inspection task. In the inspection task execution stage, the execution condition of the inspection task is monitored in a wireless communication mode, and the equipment state of the mobile substation, the GPS position information and the meteorological environmental information of the mobile substation site are monitored.
Third step, new construction of a flight task: the mobile substation plans the flight task corresponding to the inspection task according to the released inspection task information, and determines that the inspection task accomplishes the necessary flight task and one flight task corresponds to one takeoff/landing flight inspection of the airplane; and in the new construction of the flight task, the inspection tower and the transmission line section corresponding to the flight task, and monitoring equipment (infrared, ultraviolet or visible light) corresponding to the flight task should be determined, a corresponding flight route is planned, and if the flight route is present, it is directly imported.
Fourth step, flight task execution: the mobile substation sends the flight route information in the flight task to be executed to the flight control module, and the unmanned aerial vehicle is started to carry out flight inspection. In the inspection process, the flight task is monitored, and the flight state, the pod state, the flight track and the meteorological information are mainly monitored.
Fifth step, flight task accomplishment: corresponding inspection result data should be imported in the mobile substation, the inspection image information is preprocessed, a flight report is generated in combination with flight process information, the flight report, the flight result data, the flight process data and the flight monitoring data are sent to the centralized monitoring subsystem, and the flight monitoring data needs to be transmitted to the centralized monitoring subsystem in real time.
Sixth step, inspection task accomplishment: the centralized monitoring subsystem carries out inspection defect diagnosis on the inspection result data and the main inspection image information to determine the inspection defects; verifies and diagnoses the defects primarily provided in the flight report; checks the completion degree of the inspection task, and ensures that the completion degree of the inspection task is 100%. The check method is as follows: 1) a transmission line length inspected in the flight task is the inspection transmission line length regulated in the inspection task; and 2) flight inspection is carried out on line towers involved in the inspection task.
Seventh step, inspection result processing.
Eighth step, inspection task closure: the centralized management subsystem generates a corresponding inspection report according to inspection process information, result information and defect information, and provides inspection process description and inspection result description; and the centralized management subsystem carries out defect elimination on the inspection defects in the corresponding inspection report and reflects a defect elimination result in the inspection report.

The inspection result processing flow is as follows:
first step, image preprocessing: shot image copy information in the inspection result is preprocessed, images with insufficient shooting definition, inaccurate shooting angle and inaccurate scene selection among the shot images are screened out, denoising processing is carried out on the images, and the definition and the contrast of the images are adjusted;
second step, defect diagnosis: a defect sample that is provided according to the defect expert database is diagnosed, whether the information in the images has defects is determined, a defect layer is added on the image, the defects are identified on a new image layer by squares or circles and character illustration, and a diagnosis result is saved in the database; and
third step, manual defect processing: manual confirmation is carried out on the defect information saved in the database to determine whether the defects are diagnosed, and re-identification, deletion, modification and browse operations can be carried out on corresponding defects; and image management can be carried out to browse the original image information and identify the manually found defects.

The present invention has the beneficial effects that, according to the present invention, effective centralized monitoring of the accessed unmanned aerial vehicle inspection can be achieved, and statistical analysis can be carried out on the state data of the accessed unmanned aerial vehicle inspection, so as to improve the security and the reliability of the line inspection of the unmanned aerial vehicle. Unified monitoring of the unmanned aerial vehicle inspection can be achieved in a centralized monitoring mode, which is conducive to analyzing the technical economy and the reliability of the unmanned aerial vehicle inspection and providing supports for the operation management of the unmanned aerial vehicle line inspection.

The real-time state information of the unmanned aerial vehicle line inspection and the shot image information are transmitted to the centralized monitoring subsystem in a GPRS communication mode in real time, and the inspection result data is automatically processed to improve the automation and informatization degrees of the line inspection, improve the line inspection efficiency and reduce the line inspection cost.

By means of the centralized monitoring of the state information of the unmanned aerial vehicle inspection, the scheduling personnel of the unmanned aerial vehicle inspection can effectively master the overall unmanned aerial vehicle inspection and can flexibly schedule the line inspection of the unmanned aerial vehicles, so as to improve the use efficiency of the unmanned aerial vehicles for line inspection, balance the used unmanned aerial vehicles for line inspection, prolong the service life of the unmanned aerial vehicles and reduce the use cost.

### Brief Description of the Drawings

Fig.1 is an architecture diagram of a centralized monitoring system for unmanned aerial vehicle inspection.
Fig.2 is a structural diagram of a centralized monitoring subsystem.
Fig.3 is a structural diagram of a mobile substation system.
Fig.4 is a flowchart of a monitoring method of the present invention.
Fig.5 is a flowchart of inspection result processing of the present invention.
Fig.6 is a flowchart of an unmanned aerial vehicle inspection task of the present invention.
Fig.7 is a flowchart of an unmanned aerial vehicle flight task of the present invention.

In the drawings:
1, centralized monitoring subsystem; 2, mobile substation; 3, unmanned aerial vehicle flight platform; 4, pod module; 5, flight control module; 6, first GPS module; 7, first communication module; 8, first human-computer interaction module; 9, inspection task planning module; 10, inspection equipment management module; 11, inspection personnel management module; 12, first GIS module; 13, transmission line management module; 14, inspection result management module; 15, inspection defect diagnosis module; 16, inspection report management module; 17, first data storage module; 18, inspection result management module; 18, defect elimination module; 19, inspection task monitoring module; 20, second communication module; 21, second human-computer interaction module; 22, inspection task synchronization module; 23, pod control module; 24, second GIS module; 25, flight control module; 26, flight task planning module; 27, defect pre-diagnosis module; 28, image preprocessing module; 29, meteorological monitoring module; 30, flight task monitoring module; 31, second data storage module; 32, second GPS module; 33, third communication module.

### Detailed Description of the Embodiments

In order that the technical problems to be solved, technical solutions and beneficial effects in the present invention are clearer, a further detailed description of the present invention will be given below in combination with accompanying drawings and embodiments. It should be understood that the specific embodiments described herein are merely used for explaining the present invention, rather than limiting the present invention.

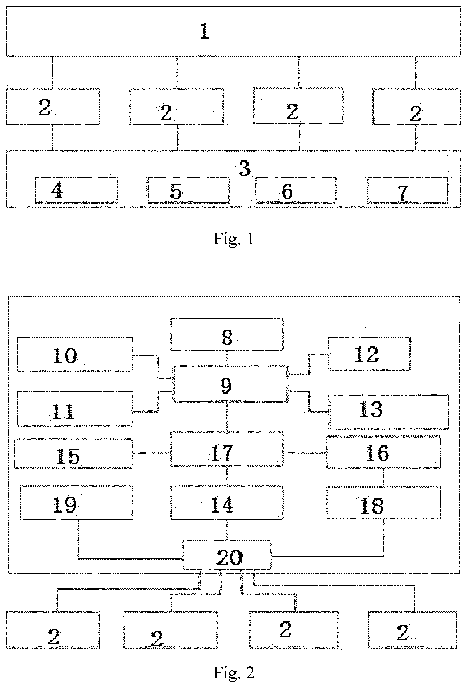

As shown in Fig.1, it is a centralized monitoring system for unmanned aerial vehicle inspection. The system includes:
a centralized monitoring subsystem 1, mobile substations 2 and unmanned aerial vehicle flight platforms 3.

Wherein, the centralized monitoring subsystem 1 is simultaneously accessed and activated online with a plurality of mobile substations 2.

In the centralized monitoring subsystem 1, a human-computer interaction module 8 can select unmanned aerial vehicle manipulation equipment as basic human-computer interaction equipment, and meanwhile can also select or combine a remote controller, a keyboard, a mouse, audio equipment, a display and a multichannel circular-screen stereo projection system, which are configured according to demand; an inspection task planning module 9 is connected with an inspection equipment management module 10, an inspection personnel management module 11, a first GIS module 12 and a transmission line management module 13, and is used for planning the inspected transmission line, the equipment, the personnel and the unmanned aerial vehicle on a GIS map, and determining the inspected transmission line, the equipment, the personnel and the time according to the reliability of the equipment, the skill mastery of the personnel, the complexity of the inspection geographical environment, the importance of the line, the seasonal factor, the economical efficiency and other influence factors; the inspection task planning module 9 is also connected with a second communication module 20 for sending inspection task information to the mobile substation 2, and the mobile substation 2 executes a corresponding inspection task;
an inspection task monitoring module 19 is connected with the second communication module 20 and the human-computer interaction module 8, and is used for reading real-time state information and power environment information of an unmanned aerial vehicle inspection site, and describing the real-time state scene and the power environment of the current inspection of the unmanned aerial vehicle in video and image modes;
an inspection result management module 14 is connected with the second communication module 20 and a first data storage module 17, and is used for reading and storing the inspection state data and the inspection result data of the unmanned aerial vehicle, and achieving browse, comparison, analysis and report management of the inspection data; an inspection defect diagnosis module 15 is connected with the first data storage module 17 and the inspection result management module 14, and is used for carrying out defect diagnosis on the inspection result data that includes inspection image, video and other information, displaying the corresponding defect diagnosis result on the image and the video in the mode of position identification and character illustration, as well as carrying out browse, edition and deletion on a defect processing result;
an inspection report management module 16 is connected with the inspection defect diagnosis module 15 and the first data storage module 17, and is used for generating an inspection task report of the unmanned aerial vehicle inspection task, describing the inspection process and the result information of the corresponding inspection task and the found defect information, and carrying out browse, edition, deletion and audit operations on the inspection report;
the inspection report management module 16 is interconnected with a defect elimination module 18 and the first communication module 20, and is used for announcing inspection defects listed in the inspection report and pushing the same to the defect elimination personnel in a form of a mail, a message and a short message, and the defect elimination personnel execute defect elimination;
the first GIS module 12 is associated with the transmission line management module 13, and is used for importing, displaying, editing, deleting and saving the transmission line information of the unmanned aerial vehicle inspection on the GIS map;
the second communication module 20 in the centralized monitoring subsystem 1 can access the mobile substation through GPRS wireless communication to read the real-time state information of the mobile substation, and is used for responding to a remote instruction of the human-computer interaction module, and obtaining the inspection information of the mobile substation and the unmanned aerial vehicle flight platform in real time. The second communication module 20 can also select wireless mobile communication of GSM, CDMA, WCDMA, TD-SCDMA and LTE communication systems, wifi wireless communication, and local area network and internet communication modes for communication;
the inspection defect diagnosis module 15 in the centralized monitoring subsystem 1 includes a defect expert database, a defect diagnosis unit, an image preprocessing unit and a defect management unit, wherein the image preprocessing unit is connected with the first data storage module 17 and is used for preprocessing an original image, and screening out images with insufficient definition and inaccurate scene selection; the defect expert database is connected with the defect diagnosis unit and is used for carrying out defect diagnosis according to the image information and identifying corresponding defects on the image in the form of position identification and character illustration;
the defect elimination module 18 in the centralized monitoring subsystem 1 includes a defect task release module, a defect task push module and a defect elimination confirmation module. Wherein, the defect task release module is connected with the defect task push module and is used for reading the defect task information and sending the same to operation and maintenance defect elimination personnel of the transmission line section to which the defects belong in a form of a message, a mail and a short message, and the operation and maintenance defect elimination personnel execute a defect elimination task; and the defect elimination confirmation module is used by the operation and maintenance defect elimination personnel for accomplishing the defect elimination task, and confirming the accomplishment of the defect elimination task after submitting a corresponding defect elimination proof image.

In the centralized monitoring subsystem 1, the transmission line management module 13 includes a line information import and export unit, a line information query unit and a line information maintenance unit. Wherein, the line information import and export unit is used for importing and exporting the transmission line information, and the import and export format can select an XML file format, as well as text, CSV, EXCEL, word, pdf, etc.

In the centralized monitoring subsystem 1, the inspection equipment management module 10 includes an equipment information import and export unit, an equipment information query unit and an equipment information management unit. Wherein, the equipment information import and export unit is used for importing and exporting the equipment information, and the import and export format can select an XML file format, as well as text, EXCEL, word, pdf, etc.

In the centralized monitoring subsystem 1, the first GIS module 12 includes a GIS line information import and export unit, a line information display unit and a line information maintenance unit. The GIS line information import and export file format can adopt an XML file, as well as text, CSV, EXCEL, WORD, PDF, etc.

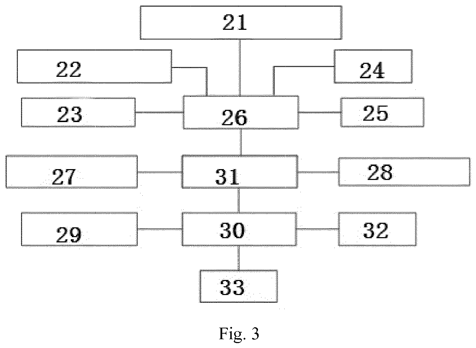

As shown in Fig.3, the mobile substation 2 includes a second human-computer interaction module 21, an inspection task synchronization module 22, a pod control module 23, a second GIS module 24, a flight control module 25, a flight task planning module 26, a defect pre-diagnosis module 27, an image preprocessing module 28, a meteorological monitoring module 29, a flight task monitoring module 30, a second data storage module 31, a second GPS module 32 and a third communication module 33.

The second human-computer interaction module 21 adopts unmanned aerial vehicle manipulation equipment to achieve the human-computer interaction, and can also select or combine a remote controller, displacement tracking equipment, a motion platform with six degrees of freedom, a keyboard, a mouse, audio equipment, a display and a multichannel circular-screen stereo projection system.

The flight task planning module 26 is connected with the inspection task synchronization module 22, the pod control module 23, the flight control module 25 and the second GIS module 24, and is used for planning an unmanned aerial vehicle flight task.

The flight task planning module 26 includes a flight planning unit, a flight task information import and export unit and a flight task information management unit. The flight task import and export unit can import and export a corresponding flight task file, and the import and export file format adopts an XML file format, and can also select or combine text, XML, CSV, EXCEL, WORD, BMP, JPEG, GIF, TIFF, TGA, EXIF, etc.

The defect pre-diagnosis module 27 is connected with the image preprocessing module 28 and the second data storage module 31, and is used for accomplishing the pre-diagnosis of the inspection result data in the mobile substation 2 and primarily filtering useless image information.

The flight task monitoring module 30 is associated with the meteorological monitoring module 29, the second GIS module 24 and the third communication module 33, and is used for monitoring the inspection task information and the inspection result data of the unmanned aerial vehicle flight platform 3.

The flight task monitoring module 30 is associated with the third communication module 33, and can send the read inspection task information and the inspection result data of the unmanned aerial vehicle and the mobile substation 2 to the centralized monitoring subsystem 1.

The meteorological monitoring module 29 can adopt an integrated meteorological monitoring instrument, and can also select or combine a temperature sensor, a humidity sensor, a wind speed sensor, an air density (air pressure) sensor, an altitude tester, etc.

The second GIS module 24 includes a GIS line information import unit and a line information display unit. The GIS line information import unit is used for importing the GIS line information, and the import file format can adopt XML, and can also select text, CSV, EXCEL, WORD, PDF and the like; and
the third communication module 33 includes a wireless communication unit, a wired communication unit, a data transmission unit and an image transmission unit. The wireless communication unit adopts the GPRS communication mode, and can also select or combine communication modules of wireless mobile communication of GSM, GPRS, CDMA, WCDMA, TD-SCDMA and LTE communication systems, and wifi wireless communication.

The unmanned aerial vehicle flight platform 3 mainly includes a pod module 4, a flight control module 5, a first GPS module 6, a first communication module 7 and an unmanned aerial vehicle airframe. The pod module 4, the flight control module 5 and the first GPS module 6 communicate with the mobile substation 2 through the first communication module 7. The first communication module 7 includes a data transmission unit and an image transmission unit, and can adopt a digital radio, as well as an analog radio. The pod module 4 adopts a visible light camera, and can also select or combine a camera, an infrared thermal imaging camera, an ultraviolet imaging camera and the like. The unmanned aerial vehicle airframe can adopt a rotor unmanned aerial vehicle, and can also adopt a multi-rotor or a fixed-wing unmanned aerial vehicle.

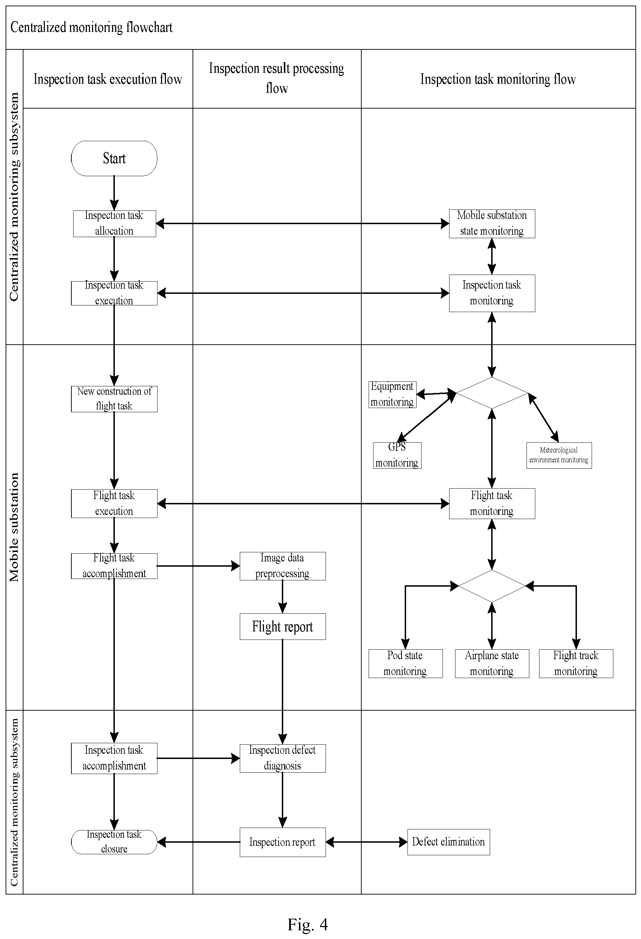

As shown in Fig.4, the centralized monitoring flow of the unmanned aerial vehicle inspection of the present invention is divided into three large basic flows: an inspection task execution flow, an inspection result processing flow and an inspection task monitoring flow. The interaction flow of the centralized monitoring of the unmanned aerial vehicle inspection is as follows:
first step, inspection task allocation: inspection tasks are allocated according to the information of inspected transmission lines and the monitored state information of the mobile substation, a transmission line section, an inspection time, an inspection type, an inspection target and other information corresponding to each inspection task are determined, and inspection personnel and equipment are configured for each inspection task. The monitoring on the state information of the mobile substation 2 in the stage is monitoring the GPS position information of the mobile substation 2, the integrity of mobile substation 2 equipment, the full extent of crew and the like, so as to allocate the corresponding inspection task.
Second step, inspection task execution: corresponding inspection task information is audited, and the audited inspection task information is released to the corresponding mobile substation 2 to execute the corresponding inspection task. In the inspection task execution stage, the execution condition of the inspection task is monitored in a wireless communication mode, and the equipment state of the mobile substation 2, the GPS position information and the meteorological environmental information of the mobile substation 2 site are monitored.
Third step, new construction of a flight task: the mobile substation 2 plans the flight task corresponding to the inspection task according to the released inspection task information, and determines that the inspection task accomplishes the necessary flight task and one flight task corresponds to one takeoff/landing flight inspection of the airplane; and in the new construction of the flight task, the inspection tower and the transmission line section corresponding to the flight task, and monitoring equipment (infrared, ultraviolet or visible light) corresponding to the flight task should be determined, a corresponding flight route is planned, and if the flight route is present, it is directly imported.
Fourth step, flight task execution: the mobile substation 2 sends the flight route information in the flight task to be executed to the flight control module, and the unmanned aerial vehicle is started to carry out flight inspection. In the inspection process, the flight task is monitored, and a flight state, a pod state, a flight track and the meteorological information are mainly monitored.
Fifth step, flight task accomplishment: corresponding inspection result data should be imported in the mobile substation 2, the inspection image information is preprocessed, a flight report is generated in combination with flight process information, the flight report, the flight result data, the flight process data and the flight monitoring data are sent to the centralized monitoring subsystem 1, and the flight monitoring data needs to be transmitted to the centralized monitoring subsystem 1 in real time.
Sixth step, inspection task accomplishment: the centralized monitoring subsystem 1 carries out inspection defect diagnosis on the inspection result data and the main inspection image information to determine the inspection defects; verifies and diagnoses the defects primarily provided in the flight report; checks the completion degree of the inspection task, and ensures that the completion degree of the inspection task is 100%. The check method is as follows: 1) a transmission line length inspected in the flight task is the inspection transmission line length regulated in the inspection task; and 2) flight inspection is carried out on line towers involved in the inspection task.

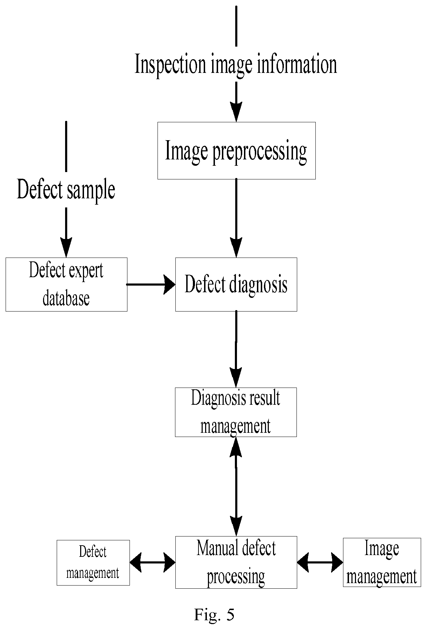

As shown in Fig.5, seventh step, the inspection result processing flow is as follows:
step 1, image preprocessing: shot image copy information in the inspection result is preprocessed, images with insufficient shooting definition, inaccurate shooting angle and inaccurate scene selection among the shot images are screened out, denoising processing is carried out on the images, and the definition and the contrast of the images are adjusted;
step 2, defect diagnosis: a defect sample that is provided according to the defect expert database is diagnosed, whether the information in the images has defects is determined, a defect layer is added on the image, the defects are identified on a new image layer by squares or circles and character illustration, and a diagnosis result is saved in the database; and
step 3, manual defect processing: manual confirmation is carried out on the defect information saved in the database to determine whether the defects are diagnosed, and re-identification, deletion, modification and browse operations can be carried out on corresponding defects; and image management can be carried out to browse the original image information and identify the manually found defects.

Eighth step, inspection task closure: the centralized management subsystem 1 generates a corresponding inspection report according to inspection process information, result information and defect information, and provides inspection process description and inspection result description; and the centralized management subsystem carries out defect elimination on the inspection defects in the corresponding inspection report and reflects a defect elimination result in the inspection report.

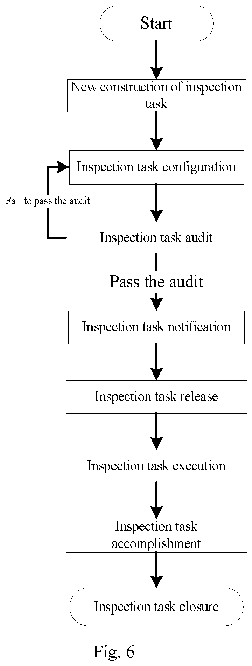

As shown in Fig.6, the flow of the unmanned aerial vehicle inspection task can be executed in the following 8 steps:
first step, new construction of the inspection task: in a transmission line on a GIS map, according to the existing transmission line information and defect conditions inspected on the corresponding line section, the transmission line section of the inspection task is determined, and the inspection time, the inspection type, the inspection target and other information are specified; in the new construction of the inspection task, the new construction of the inspection task can also be accomplished by cloning, and the cloning requires the modification of the execution time and other parameters of the inspection task. The currently determined inspection task information includes a task name, a line name, a voltage grade, starting and ending tower numbers, towers (bases), a line length, the inspection type, the inspection target, a planned start time, a planned end time, the person in charge and other information.
Second step, inspection task configuration: the types of a detection terminal and the unmanned aerial vehicle are determined according to the type of the inspection task and the inspection target; and the idle inspection crew and inspection equipment within the time period according to the planned time period of the inspection task and the machine set type.
Third step, inspection task audit: a transmission line inspection manager audits the inspection task, and the fourth step can be executed if the audit is passed; and otherwise, if the task configuration does not pass the audit, the second step is executed to configure the corresponding inspection task again; and if the audit on the inspection line plan is not passed, the first step is executed to adjust the inspected transmission line section.
Fourth step, inspection task notification: an inspection task notification is released for the audited inspection task in the form of a message, a short message and a mail. Fifth step, inspection task release: the corresponding inspection task is sent to the corresponding mobile substation 2 through the Ethernet or in a wireless network form to release the inspection task.
Sixth step, inspection task execution: in the mobile substation 2, a corresponding flight task is established according to the corresponding inspection task, unmanned aerial vehicle inspection is executed, and inspection process information and result information are sent to the centralized monitoring subsystem 1.
Seventh step, inspection task accomplishment: after checking that the completion degree of the inspection task reaches 100%, all inspection task process information, the result information, the flight report and the flight log information are sent to the centralized monitoring subsystem 1.
Eighth step, inspection task closure: defect identification processing is carried out on the inspection result according to the inspection process information, the result information, the flight log and the flight report, and an inspection defect list is provided; corresponding inspection defects are sent to the inspection defect elimination module to eliminate the defects; and a corresponding inspection report is generated according to the inspection process information, the result information and the defect information, and the inspection task is closed.

After the inspection task is accomplished, the final inspection result forms the inspection report, and the inspection report contains the inspection process information, the flight state information, the meteorological information, the flight log, the inspected defect information, the inspection task information and other contents.

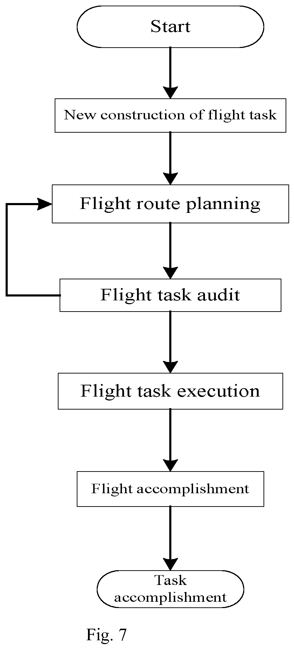

As shown in Fig.7, the execution flow of the unmanned aerial vehicle flight task in the mobile substation can be divided into the following 6 steps:
first step, new construction of the flight task: the flight task of the flight inspection of the unmanned aerial vehicle is established according to the inspection task information of the unmanned aerial vehicle that is synchronized to the mobile substation 2. The transmission line information to be inspected is displayed in the GIS map, the tower line section of the flight inspection is selected, the GPS position information of the inspection tower and the airplane takeoff/landing points is written in the XML file, and a GPS satellite map for inspection can be automatically selected by a frame to serve as the inspection map.
Second step, flight route planning: if a corresponding flight route is available for the corresponding inspection tower transmission line section, the corresponding flight route is selected; and otherwise, the flight route of the unmanned aerial vehicle is planned according to the inspection tower transmission line section determined in the flight task, and the flight route point, the inspection suspension point, the return route, the takeoff/landing points and the like of the unmanned aerial vehicle are planned.
Third step, flight task audit: the determined inspection transmission line and the corresponding flight route for the unmanned aerial vehicle flight task are audited, and the fourth step is executed if the audit is passed; and if the audit is not passed, the second step is executed to replan the flight route.
Fourth step, flight task execution: the flight route information, the GPS position information of the suspension point and the flight map determined for the flight task are released to the flight control module, the unmanned aerial vehicle is started to carry out transmission line inspection flight, and the flight control module interacts with the unmanned aerial vehicle in a flight process to control the flight of the unmanned aerial vehicle; and the detection pod of the unmanned aerial vehicle is controlled by the pod control module 23 to shoot and photograph Fifth step, flight accomplishment: the unmanned aerial vehicle sends corresponding flight state information to the mobile substation 2 in the flight process, and sends the flight inspection result data (images, videos) to the mobile substation 2.
Sixth step, task accomplishment: the flight log is imported in the mobile substation 2, primary defect diagnosis analysis is carried out according to the flight process data and the flight result data to generate a corresponding flight report, and the generated flight report is sent to the centralized monitoring management subsystem 1.

## Claims

1. A monitoring system for transmission line inspection of unmanned aerial vehicles (3), comprising a mobile substation (2) and an unmanned aerial vehicle flight platform (3)wherein the mobile substation (2) is connected with the unmanned aerial vehicle flight platform (3) ;
the mobile substation (2) is used for planning and releasing a flight task, carrying out local monitoring on the inspection state information and the inspection data, preprocessing inspection image data and carrying out defect pre-diagnosis on the inspection result data; and
the unmanned aerial vehicle flight platform (3) comprises a pod module (4) serving as a line detection terminal, a flight control module (5) for carrying out flight control on the unmanned aerial vehicle flight platform, a GPS (6) module for carrying out GPS positioning, a communication module (7) for communicating with the mobile substation and an unmanned aerial vehicle airframe; the flight control module (5), the pod module (6) and the GPS module (7) respectively communicate with the mobile substation through data transmission communication links; and the pod module (6) sends detection image information into the mobile substation(2) through an image transmission communication link, **characterized in that** the monitoring system comprises mobile substations (2) and unmanned vehicle flight platforms (3), the mobile substations (2) being connected with the unmanned aerial vehicle flight platforms (3) in a one-to-one mode and a centralized monitoring subsystem (1), wherein the centralized monitoring subsystem is connected with the mobile substations (2) in a one-to-many mode, and the centralized monitoring subsystem (1) is used for accessing the state information and inspection data of the mobile substation (2) and the unmanned aerial vehicle flight platform (3), planning and synchronizing an unmanned aerial vehicle inspection task, carrying out real-time remote monitoring on the mobile substation (2) and the unmanned aerial vehicle flight platform (3) for the unmanned aerial vehicle inspection, carrying out defect diagnosis, statistics, analysis and display on the inspection data, and describing a real-time state scene and a power environment of the inspection of the current unmanned aerial vehicle;

2. The monitoring system for transmission line inspection of unmanned aerial vehicles of claim 1, wherein the centralized monitoring subsystem (1) comprises:
a human-computer interaction module (8), used for obtaining and analyzing an external command, sending the analyzed external command to a corresponding data processing module for processing, and displaying a corresponding processing result;
an inspection task planning module (9), used for carrying out task division on a transmission line inspected by the unmanned aerial vehicle, determining the transmission line sections inspected by the inspection machine sets, the necessary inspection equipment and the inspection crew and specifying the planned inspection time according to influence factors, comprising the reliability of the inspection equipment, the inspection records of the personnel, the inspection geographical environment and the meteorological environment, carrying out query, new construction, edition, audit, notification and release operations on the planned inspection task to accomplish the plan of the inspection task;
an inspection task monitoring module (19), used for monitoring the meteorological environment information of an unmanned aerial vehicle inspection site, the flight state information of the unmanned aerial vehicle, the state information of the mobile substation, the GPS position information, the pod control information and other real-time state information and power environment information, and describing the real-time state scene and the power environment of the current inspection of the unmanned aerial vehicle in video and image modes;
an inspection result management module (14), which is used for managing the inspection result data of the unmanned aerial vehicle, is connected with a communication module and a data storage module for achieving synchronization, browse, play, comparison, analysis and report management of the inspection result data, and accomplishing the management of the inspection result data;
an inspection defect diagnosis module (15), used for carrying out screening, preprocessing and defect diagnosis on the inspection result data that comprises image and video information, marking a defect position on an inspection image, illustrating the defect in characters, storing the inspection defect in a database, and carrying out identification, modification, deletion, query and browse operations on the corresponding inspection defect image to accomplish the defect diagnosis of the inspection result;
an inspection report management module (16), used for generating an inspection task report of the unmanned aerial vehicle inspection task, describing the transmission line, the equipment, the personnel, the time, the flight task report and the flight log information of the corresponding inspection task and the found defect information, and carrying out browse, edition, deletion and audit operations on the inspection report to accomplish the management of the inspection report;
a defect elimination module (18), used for processing the inspection defect information in the inspection report, triggering a defect elimination flow by the inspected transmission line defects, and carrying out release, allocation, notification, elimination and elimination confirmation operations on a defect elimination task to accomplish an elimination operation of the inspection defects found by the unmanned aerial vehicle inspection;
a GIS module (12), used for importing and exporting transmission line information, wherein the transmission line information is displayed in the GIS module, section division, selection and frame selection operations of the transmission line are provided, and the GIS module can be used for browsing, editing and deleting corresponding line information on the GIS map, as well as displaying the flight route information of the unmanned aerial vehicle on the GIS map;
the communication module (20), used for reading the real-time state information of the mobile substation, responding to a remote instruction of the human-computer interaction module, releasing the inspection task information to the mobile substation, obtaining the inspection information of the mobile substation and the unmanned aerial vehicle flight platform in real time, and accomplishing the information interaction and the communication of the centralized monitoring subsystem and the mobile substation;
a transmission line management module (13), used for carrying out import, export, query, browse, deletion and edition operations on a tower GPS position, a tower model number, a tower height, a starting tower serial number, tower serial numbers and other information of the transmission line to accomplish the management of the transmission line information;
an inspection personnel management module (11), used for carrying out query, maintenance, registration and deletion management on basic personnel information of the inspection crew and an inspection task manager through identity card information, achieving automatic query and display of the personnel information through an identity card reader, and carrying out query, browse, edition and deletion operations on the inspection record information of the inspection crew to accomplish the management of the inspection personnel information;
an inspection equipment management module (10), used for managing inspection equipment information, carrying out import, export, query, browse, registration, maintenance and deletion operations on the equipment information, maintaining the state information of the inspection equipment, comprising idle, inspection use, maintenance or servicing state, and achieving effective management and use of the inspection equipment; and
the data storage module (17), used for storing system data in the mode of a database and a file, wherein the data storage module is used for storing basic system data of a centralized management subsystem, the inspection process data, the inspection result data and the inspection monitoring data, and inspection video data is stored in a file, and a storage file path is stored in the database.

3. The monitoring system for transmission line inspection of unmanned aerial vehicles of claim 2, wherein,
the inspection task planning module (9) comprises an inspection task planning unit, an inspection task management unit and an inspection task information synchronization unit; the inspection task planning unit (9) is connected with the inspection equipment management module (10), the inspection personnel management module (11), the GIS module (12) and the transmission line management module, and is used for planning the inspected transmission line, the equipment, the personnel and the unmanned aerial vehicle on a GIS map, and determining the inspection factors; the inspection task management unit is connected with the inspection task planning unit and is used for managing the planed inspection task; and the inspection task information synchronization unit is connected with the inspection task management unit and is used for synchronizing the selected unmanned aerial vehicle inspection task information to the corresponding mobile substation.

4. The monitoring system for transmission line inspection of unmanned aerial vehicles of claim 2, wherein the inspection task monitoring module (19) comprises a mobile substation monitoring unit, a flight state monitoring unit, a pod monitoring unit and a meteorological environment monitoring unit, the mobile substation monitoring unit is used for monitoring the GPS information of the mobile substation, recording the motion track of the mobile substation on the GIS map and recording its historical motion tracks; the flight state monitoring unit is used for monitoring the state information of the unmanned aerial vehicle, comprising the flight GPS coordinates, the speed, the height, the rotating speed, the total distance, the cylinder temperature, the battery voltage, the battery current and the battery power; the pod monitoring unit is used for monitoring the flight pod angle, the shooting time and the shooting GPS position information of the unmanned aerial vehicle; and the meteorological environment monitoring unit is used for displaying the meteorological environment information, comprising the temperature, the humidity, the wind speed, the air density and the altitude information.

5. The monitoring system for transmission line inspection of unmanned aerial vehicles of claim 2, wherein the inspection defect diagnosis module (15) comprises a defect expert database, a defect diagnosis unit, an image preprocessing unit and a defect management unit, wherein the image preprocessing unit is used for preprocessing the image information, carrying out definition and scene selection accuracy identification on an original inspection image, deleting images with insufficient definition and inaccurate scene selection, and splicing and editing diagnostic images; the defect expert database is used for integrating feature libraries of transmission line defects, is connected with the defect diagnosis unit, and is used for carrying out comparative analysis on a preprocessed image and the defect expert database, analyzing the transmission line defects and identifying corresponding defects on the image in the mode of position identification and character illustration; the defect diagnosis unit is used for storing the diagnosed defects in the data storage module; and the defect management unit is used for achieving identification, modification, deletion, query and browse of the inspection defect image.

6. The monitoring system for transmission line inspection of unmanned aerial vehicles of claim 1 or 2, wherein the mobile substation (2) comprises:
a human-computer interaction module (21), used for obtaining and analyzing an external command, sending the analyzed external command to a corresponding data processing module for processing, displaying a corresponding processing result, inputting and outputting system data, and accomplishing human-system interaction; an inspection task synchronization module (22), used for synchronizing the inspection task information in the centralized monitoring subsystem to the local, carrying out query and state maintenance on the inspection task that is synchronized to the local, and setting a current inspection task to accomplish the synchronization and the management of the inspection task information;
a pod control module (23), used for monitoring and controlling a pod on the unmanned aerial vehicle flight platform, reading pod information which comprises, but not limited to, the pod angle, the battery power, the battery voltage, the battery current, the shooting time and the shooting GPS value in real time, as well as releasing a control instruction according to the external instruction, controlling the pod angle, executing a shooting action and stopping the shooting action, so as to monitor the pod on the unmanned aerial vehicle flight platform;
a GIS module (24), used for importing, exporting and displaying the transmission line information of the inspection task, providing frame selection and GPS position positioning operations of the GIS map, and providing a calibration operation function of a GPS position point on the GIS map;
a flight control module (25), used for monitoring and controlling the state information of the unmanned aerial vehicle flight platform, reading the GPS information, the speed, the height, the rotating speed, the total distance, the cylinder temperature, the battery voltage, the battery current and the battery power information of the unmanned aerial vehicle flight platform in real time, and releasing a command to the unmanned aerial vehicle flight platform according to the external instruction to control the unmanned aerial vehicle flight platform;
a flight task planning module (26), used for planning takeoff/landing points, a suspension point, track points, a corresponding flight height, a flight speed and a line distance of unmanned aerial vehicle inspection on the GIS map according to the transmission line information, the geographical environment information and the meteorological environment information of the unmanned aerial vehicle inspection, generating a corresponding flight route, and carrying out query, browse, deletion, import and export operations on the flight task information of the unmanned aerial vehicle to accomplish the management and the plan of the flight task;
a defect pre-diagnosis module (27), used for editing and splicing images, screening out images with potential defect possibility, identifying the defect information and the defect position information in image information, and carrying out identification, modification, deletion, query and browse operations on the corresponding defect information to accomplish the defect diagnosis and management of the inspection result;
an image preprocessing module (28), used for preprocessing and managing the inspected image information, carrying out browse, edition, screening and preprocessing operations on the corresponding defect information, screening out images with insufficient shooting definition, inaccurate shooting angle and inaccurate scene selection among shot images, carrying out denoising processing on the images, and adjusting the definition and the contrast of the images to achieve the preprocessing of the image information;
a meteorological monitoring module (29), which is used for monitoring the meteorological information of an inspection site of the unmanned aerial vehicle in real time, and is connected with the flight task monitoring module by a matching interface to send the monitored meteorological information to the centralized monitoring subsystem;
a flight task monitoring module (30), used for monitoring the flight state information, the meteorological information of the inspection site and the GPS position information, and displaying the same in the human-computer interaction module, as well as sending the corresponding flight task monitoring information to the centralized monitoring subsystem by a communication module;
a data storage module (31), used for storing the system data, and storing the basic system data of the centralized management subsystem, the inspection process data, the inspection result data and the inspection monitoring data through the data, wherein the inspection video data is stored in the file, and the storage file path is stored in the database;
a GPS module (32), which is used for achieving GPS positioning of the mobile substation, and is connected with the flight task monitoring module through a serial port to send the GPS information of the mobile substation to the centralized monitoring subsystem; and
the communication module (33), used for realizing the data interaction with the centralized monitoring subsystem, synchronizing the inspection task information from the centralized monitoring subsystem and sending the inspection data and the inspection monitoring data to the centralized monitoring subsystem, wherein the communication module can also be used for reading the unmanned aerial vehicle state information and the inspection video information of the unmanned aerial vehicle flight platform through a data transmission module and an image transmission module.

7. The monitoring system for transmission line inspection of unmanned aerial vehicles of claim 6, wherein the inspection task synchronization module (22) comprises an inspection task information synchronization unit, an inspection task query unit and a current inspection task setting unit; the inspection task information synchronization unit (22) is used for synchronizing the inspection task information; the inspection task query unit is used for querying the inspection task information on the mobile substation; and the current inspection task setting unit is used for setting a current default inspection task.

8. The monitoring system for transmission line inspection of unmanned aerial vehicles of claim 6, wherein the flight task planning module (26) comprises a flight planning unit, a flight task information import and export unit and a flight task information management unit; the flight planning unit is used for planning the takeoff/landing points, the suspension point, the track points, the corresponding flight height, the flight speed and the line distance of the inspection unmanned aerial vehicle; the flight task information management unit is used for querying, browsing and deleting the flight task information; and the flight task import and export unit is used for importing and exporting a corresponding flight task file.

9. A monitoring method for transmission line inspection of unmanned aerial vehicles of claim 1, wherein the specific flow is as follows:
first step, inspection task allocation: inspection tasks are allocated according to the information of inspected transmission lines and the monitored state information of the mobile substation, a transmission line section, an inspection time, an inspection type and an inspection target corresponding to each inspection task are determined, and inspection personnel and equipment are configured for each inspection task. The monitoring on the state information of the mobile substation in the stage is monitoring the GPS position information of the mobile substation, the integrity of mobile substation equipment, the full extent of crew and the like, so as to allocate the corresponding inspection task;
second step, inspection task execution: corresponding inspection task information is audited, and the audited inspection task information is released to the corresponding mobile substation to execute the corresponding inspection task; in the inspection task execution stage, the execution condition of the inspection task is monitored in a wireless communication mode, and the equipment state of the mobile substation, the GPS position information and the meteorological environmental information of the mobile substation site are monitored;
third step, new construction of a flight task: the mobile substation plans the flight task corresponding to the inspection task according to the released inspection task information, and determines that the inspection task accomplishes the necessary flight task and one flight task corresponds to one takeoff/landing flight inspection of the airplane; and in the new construction of the flight task, the inspection tower and the transmission line section corresponding to the flight task, and monitoring equipment corresponding to the flight task should be determined, a corresponding flight route is planned, and if the flight route is present, it is directly imported;
fourth step, flight task execution: the mobile substation sends the flight route information in the flight task to be executed to the flight control module, and the unmanned aerial vehicle is started to carry out flight inspection; in the inspection process, the flight task is monitored, and the flight state, the pod state, the flight track and the meteorological information are mainly monitored;
fifth step, flight task accomplishment: corresponding inspection result data is imported in the mobile substation, the inspection image information is preprocessed, a flight report is generated in combination with flight process information, the flight report, the flight result data, the flight process data and the flight monitoring data are sent to the centralized monitoring subsystem, and the flight monitoring data is transmitted to the centralized monitoring subsystem in real time;
sixth step, inspection task accomplishment: the centralized monitoring subsystem carries out inspection defect diagnosis on the inspection result data and the main inspection image information to determine the inspection defects; verifies and diagnoses the defects primarily provided in the flight report; checks the completion degree of the inspection task, and ensures that the completion degree of the inspection task is 100%;
seventh step, inspection result processing; and
eighth step, inspection task closure: the centralized management subsystem generates a corresponding inspection report according to inspection process information, result information and defect information, and provides inspection process description and inspection result description; and the centralized management subsystem carries out defect elimination on the inspection defects in the corresponding inspection report and reflects a defect elimination result in the inspection report.

10. The monitoring method for transmission line inspection of unmanned aerial vehicles of claim 9, wherein the inspection result processing flow is as follows:
first step, image preprocessing: shot image copy information in the inspection result is preprocessed, images with insufficient shooting definition, inaccurate shooting angle and inaccurate scene selection among the shot images are screened out, denoising processing is carried out on the images, and the definition and the contrast of the images are adjusted;
second step, defect diagnosis: a defect sample that is provided according to the defect expert database is diagnosed, whether the information in the images has defects is determined, a defect layer is added on the image, the defects are identified on a new image layer by squares or circles and character illustration, and a diagnosis result is saved in the database; and
third step, manual defect processing: manual confirmation is carried out on the defect information saved in the database to determine whether the defects are diagnosed, and re-identification, deletion, modification and browse operations are carried out on corresponding defects; and image management is carried out to browse the original image information and identify the manually found defects.

## Patentansprüche

1. Überwachungssystem für die Energieübertragungsleitungsprüfung durch unbemannte Luftfahrzeuge (3), umfassend eine mobile Unterstation (2) und eine Flugplattform (3) für unbemanntes Luftfahrzeug, wobei die mobile Unterstation (2) mit der Flugplattform (3) für unbemanntes Luftfahrzeug verbunden ist;
die mobile Unterstation (2) zur Planung und Ausgabe einer Flugaufgabe, zur Ausführung örtlicher Überwachung der Prüfungsstatusinformationen und der Prüfungsdaten, zur Vorverarbeitung von Prüfungsbilddaten und zur Ausführung von Fehlervordiagnosen auf die Prüfungsergebnisdaten benutzt ist; und
die Flugplattform (3) für unbemanntes Luftfahrzeug ein als Leitungserfassungsendgerät dienendes Bausteingruppemodul (4), ein Flugsteuermodul (5) zur Ausführung einer Flugsteuerung auf der Flugplattform (3) für unbemanntes Luftfahrzeug, ein GPS-Modul (6) zur Ausführung der GPS-Positionierung, ein Kommunikationsmodul (7) zur Kommunikation mit der mobilen Unterstation und einer Zelle eines unbemannten Luftfahrzeuges umfasst; das Flugsteuermodul (5), das Bausteingruppemodul (4) und das GPS-Modul (6) jeweils mit der mobilen Unterstation (2) über Datenübertragungsverbindungen kommunizieren; und das Bausteingruppemodul (4) Erfassungsbildinformationen über eine Bildübertragungsverbindung in die mobile Unterstation (2) sendet, **dadurch gekennzeichnet, dass** das Überwachungssystem mobile Unterstationen (2) und Flugplattformen (3) für unbemanntes Luftfahrzeug umfasst, wobei die mobilen Unterstationen (2) mit den Flugplattformen (3) für unbemanntes Luftfahrzeug in einem Eins-zu-Eins-Modus und mit einem zentralen Überwachungsuntersystem (1) verbunden sind, wobei das zentrale Überwachungsuntersystem (1) mit den mobilen Unterstationen (2) in einem Eins-zu-Vielen-Modus verbunden ist, und das zentrale Überwachungssystem (1) zum Zugang zu den Statusinformationen und Prüfungsdaten der mobilen Unterstation (2) und der Flugplattform (3) für unbemanntes Luftfahrzeug, zur Planung und Synchronisierung einer Prüfungsaufgabe für unbemanntes Luftfahrzeug, zur Ausführung einer Echtzeitfernüberwachung auf der mobilen Unterstation (2) und auf der Flugplattform (3) für unbemanntes Luftfahrzeug zur Prüfung durch unbemannte Luftfahrzeuge, zur Ausführung von Fehlerdiagnosen, von Statistiken, einer Analyse und Anzeige auf den Prüfungsdaten, und zur Darstellung einer Echtzeitstatusszene und einer Energieumgebung der Prüfung durch das gegenwärtige unbemannte Luftfahrzeug benutzt ist.

2. Überwachungssystem für die Energieübertragungsleitungsprüfung durch unbemannte Luftfahrzeuge nach Anspruch 1, wobei das zentrale Überwachungsuntersystem (1) umfasst:
ein Mensch-Rechner-Wechselwirkungsmodul (8) benutzt zum Erhalten und zur Analyse eines externen Befehls, zur Sendung des analysierten externen Befehls zu einem entsprechenden Datenverarbeitungsmodul zur Verarbeitung, und zur Anzeige eines entsprechenden Verarbeitungsergebnisses;
ein Prüfungsaufgabeplanungsmodul (9) benutzt zur Ausführung einer Aufgabenteilung auf einer vom unbemannten Luftfahrzeug geprüften Übertragungsleitung, zur Bestimmung der von durch die Prüfungsmaschinengruppen geprüften Übertragungsleitungsabschnitten, der notwendigen Prüfungsausrüstung und der Prüfungsbesatzung und zur Festlegung der geplanten Prüfungszeit gemäß den Einflussfaktoren umfassend die Zuverlässigkeit der Prüfungsausrüstung, die Prüfprotokolle der Besatzung, die geografische Umgebung und die meteorologische Umgebung der Prüfung, zur Ausführung von Abfrage-, Neuerstellungs-, Überarbeitungs-, Audit-, Mitteilungs- und Ausgabevorgängen auf dem geplanten Prüfungsaufgabe, um den Plan der Prüfungsaufgabe durchzuführen.
ein Prüfungsaufgabeüberwachungsmodul (19) benutzt zur Überwachung der meteorologischen Umgebungsinformationen des Prüfortes des unbemannten Luftfahrzeuges, der Flugzustandsinformationen des unbemannten Luftfahrzeug, der Zustandsinformationen der mobilen Unterstation, der GPS-Positionsinformationen, der Bausteingruppesteuerinformationen und von anderen Echtzeitzustandsinformationen und Energieumgebungsinformationen, und zur Beschreibung der Echtzeitzustandsszene und der Energieumgebung der gegenwärtigen Prüfung durch das unbemannte Luftfahrzeug in Video- und Bildmodi;
ein Prüfergebnisverwaltungsmodul (14), das zur Verwaltung der Prüfergebnisdaten des unbemannten Luftfahrzeuges benutzt ist, mit einem Kommunikationsmodul und einem Datenspeichermodul verbunden ist zur Erreichung von Synchronisation, Durchsuchung, Spiel, Vergleich, Analyse und Berichtsverwaltung der Prüfergebnisdaten, und zur Durchführung der Verwaltung der Prüfergebnisdaten;
ein Prüffehlerdiagnosemodul (15), benutzt zur Ausführung einer Filterung, einer Vorverarbeitung und einer Fehlerdiagnose auf den Prüfergebnisdaten, die Bild- und Videoinformationen umfassen, zur Markierung einer Fehlerposition auf einem Prüfbild, zur Darstellung des Fehlers mit Zeichen, zur Speicherung des Prüffehlers in einer Datenbank, und zur Ausführung von Identifikations-, Änderungs-, Löschungs-, Abfrage- und Durchsuchungsvorgängen auf dem entsprechenden Prüffehlbild, um die Fehlerdiagnose des Prüfergebnisses durchzuführen;
ein Prüfberichtverwaltungsmodul (16) benutzt zur Erzeugung eines Prüfaufgabeberichtes der Prüfaufgabe des unbemannten Luftfahrzeuges, zur Beschreibung der Übertragungsleitung, der Ausrüstung, des Personals, des Flugaufgabeberichtes und der Flugbuchinformationen der entsprechenden Prüfaufgabe und der Informationen des gefundenen Fehlers, und zur Ausführung von Durchsuchungs-, Überarbeitungs-, Löschungs-, und Auditvorgängen auf dem Prüfbericht, um die Verwaltung des Prüfberichtes durchzuführen.
ein Fehlerbeseitigungsmodul (18) benutzt zur Verarbeitung der Prüffehlerinformationen im Prüfbericht, zur Auslösung eines Fehlerbeseitigungsflussdiagramms mit den Fehlern der geprüften Übertragungsleitung, und zur Ausführung von Ausgabe-, Zuordnungs-, Mitteilungs-, Beseitigungs- und Beseitigungsbestätigungsvorgängen auf einer Fehlerbeseitigungsaufgabe, um einen Beseitigungsvorgang der Prüffehler durchzuführen, die durch die Prüfung mit unbemannten Luftfahrzeugen gefunden wurden;
ein GIS-Modul (12), benutzt zur Einführ und Ausfuhr von Übertragungsleitungsinformationen , wobei die Übertragungsleitungsinformationen im GIS-Modul angezeigt sind, Abschnittaufteilungs-, Auswahl- und Rasterbildauswahlvorgänge vorgesehen sind, und das GIS-Modul zur Durchsuchung, Überarbeitung und Löschung von entsprechenden Leitungsinformationen auf der GIS-Karte, sowie zur Anzeige der Flugstreckeninformationen des unbemannten Luftfahrzeuges auf der GIS-Karte benutzt werden kann;
das Kommunikationsmodul (20), benutzt zum Lesen der Echtzeitinformationen der mobilen Unterstation, zum Beantwortung eines Fernbefehls des Mensch-Rechner-Wechselwirkungsmoduls, zur Ausgabe der Prüfaufgabeinformationen zur mobilen Unterstation, zum Erhalten der Prüfungsinformationen der mobilen Unterstation und der Flugplattform für unbemanntes Luftfahrzeug in Echtzeit, und zur Durchführung der Informationswechselwirkung und der Kommunikation des zentralen Überwachungssubsystem und der mobilen Unterstation;
ein Übertragungsleitungsverwaltungsmodul (13), benutzt zur Ausführung von Einfuhr-, Ausfuhr-, Abfrage-, Löschungs- und Überarbeitungsvorgängen auf einer GPS-Mastposition, einer Mastmodellnummer, einer Masthöhe, einer Startmastseriennummer, Mastseriennummern, und anderen Informationen der Übertragungsleitung, um die Verwaltung der Übertragungsleitungsinformationen durchzuführen;
ein Prüfpersonalverwaltungsmodul (11) benutzt zur Ausführung von Abfrage-, Beibehaltungs-, Registrierungs- und Löschungsverwaltung auf Personalgrundinformationen der Prüfbesatzung und des Prüfaufgabeleiters über Identitätskarteinformationen, zur Erreichung automatischer Abfrage und Anzeige der Personalinformationen über einen Identitätskarteleser, und zur Ausführung von Abfrage-, Durchsuchungs-, Überarbeitungs-, und Löschungsvorgängen auf den Prüfprotokollinformationen der Prüfbesatzung , um die Verwaltung der Prüfpersonalinformationen durchzuführen;
ein Prüfausrüstungsverwaltungsmodul (10) benutzt zur Verwaltung von Prüfausrüstungsinformationen, zur Ausführung von Einfuhr-, Ausfuhr-, Abfrage-, Durchsuchungs-, Registrierungs-, Beibehaltungs- und Löschungsvorgängen auf den Ausrüstungsinformationen, zur Beibehaltung der Zustandsinformationen der Prüfausrüstung umfassend den Leerbetrieb, den Prüfbetrieb, den Instandsetzungs- oder Instandhaltungszustand, und zur Erzielung einer wirksamen Verwaltung und Benutzung der Prüfausrüstung; und
das Datenspeicherungsmodul (17) benutzt zur Speicherung von Daten im Datenbank- und Dateimodus, wobei das Datenspeicherungsmodul zur Speicherung von basischen Systemdaten eines zentralen Verwaltungsuntersystems, der Prüfvorgangsdaten, der Prüfergebnisdaten und der Prüfüberwachungsdaten benutzt ist, und Prüfvideodaten in einer Datei gespeichert sind, und ein Speicherdateipfad in der Datenbank gespeichert ist.

3. Überwachungssystem für die Energieübertragungsleitungsprüfung durch unbemannte Luftfahrzeuge nach Anspruch 2, wobei
das Prüfungsaufgabeplanungsmodul (9) eine Prüfaufgabeplanungseinheit, eine Prüfaufgabeverwaltungseinheit und eine Prüfaufgabeinformationssynchronisationseinheit umfasst; die Prüfaufgabeplanungseinheit mit dem Prüfausrüstungsverwaltungsmodul (10), dem Prüfpersonalverwaltungsmodul (11), dem GIS-Modul (12) und mit dem Übertragungsleitungsverwaltungsmodul verbunden ist, und zur Planung der geprüften Übertragungsleitung, der Ausrüstung, des Personals und des unbemannten Luftfahrzeuges auf einer GIS-Karte, und zur Bestimmung der Prüffaktoren benutzt ist; die Prüfaufgabeverwaltungseinheit mit der Prüfaufgabeplanungseinheit verbunden ist und zur Verwaltung der geplanten Prüfaufgabe benutzt ist; und die Prüfaufgabeinformationssynchronisationseinheit mit der Prüfaufgabeverwaltungseinheit verbunden ist und zur Synchronisierung der ausgewählten über unbemannte Luftfahrzeuge gewonnenen Prüfaufgabeinformationen mit der entsprechenden mobilen Unterstation benutzt ist.

4. Überwachungssystem für die Energieübertragungsleitungsprüfung durch unbemannte Luftfahrzeuge nach Anspruch 2, wobei das Prüfungsaufgabeüberwachungsmodul (19) eine Überwachungseinheit der mobilen Unterstation, eine Flugzustandsüberwachungseinheit, eine Bausteingruppeüberwachungseinheit, und eine Überwachungseinheit der meteorologischen Umgebung, die Überwachungseinheit der mobilen Unterstation zur Überwachung der GPS-Informationen der mobilen Unterstation, zur Speicherung des Bewegungswegs der mobilen Unterstation auf der GIS-Karte und zur Speicherung ihrer historischen Bewegungswege; die Flugzustandsüberwachungseinheit zur Überwachung der Zustandsinformationen des unbemannten Luftfahrzeuges, die die GPS-Flugkoordinate, die Geschwindigkeit, die Höhe, die Drehgeschwindigkeit, den gesamten Abstand, die Zylindertemperatur, die Akkuspannung, den Akkustrom und die Akkuleistung umfassen, die Bausteingruppeüberwachungseinheit zur Überwachung des Flugbausteingruppewinkels, der Aufnahmezeit und der GPS-Aufnahmepositionsinformationen des unbemannten Luftfahrzeuges benutzt ist; und die Überwachungseinheit der meteorologischen Umgebung zur Anzeige der meteorologischen Umgebungsinformationen, die die Temperatur, die Feuchtigkeit, die Windgeschwindigkeit, die Luftdichte und die Höheninformationen umfassen.

5. Überwachungssystem für die Energieübertragungsleitungsprüfung durch unbemannte Luftfahrzeuge nach Anspruch 2, wobei das Prüffehlerdiagnosemodul (15) eine Fehlerexpertendatenbank, eine Fehlerdiagnoseeinheit, eine Bildvorverarbeitungseinheit und eine Fehlerverwaltungseinheit umfasst, wobei die Bildvorverarbeitungseinheit zur Vorverarbeitung der Bildinformationen, zur Ausführung der Schärfe und der Szeneauswahlgenauigkeitsidentifikation auf einem ursprünglichen Prüfbild, zur Löschung von Bildern mit mangelhafter Schärfe und fehlerhafter Szeneauswahl, und zur Spleißung und Überarbeitung von Diagnosebildern benutzt ist; die Fehlerexpertendatenbank zur Integration von Feature-Bibliotheken von Übertragungsleitungsfehlern benutzt ist, mit der Fehlerdiagnoseeinheit verbunden ist, und zur Ausführung von Vergleichsanalysen auf einem vorverarbeiteten Bild und auf der Fehlerexpertendatenbank, zur Analyse der Übertragungsleitungsfehler und zur Identifikation entsprechender Fehler auf dem Bild in dem Positionsidentifikations - und Zeichendarstellungsmodus benutzt ist; die Fehlerdiagnoseeinheit zur Speicherung der diagnostizierten Fehler in dem Datenspeicherungsmodul benutzt ist; und die Fehlerverwaltungseinheit zur Erreichung von Identifikation, Änderung, Löschung, Abfrage und Durchsuchung des Prüffehlbildes benutzt ist.

6. Überwachungssystem für die Energieübertragungsleitungsprüfung durch unbemannte Luftfahrzeuge nach Anspruch 1 oder 2, wobei die mobile Unterstation (2) umfasst:
ein Mensch-Rechner-Wechselwirkungsmodul (21) benutzt zum Erhalten und zur Analyse eines externen Befehls, zur Sendung des analysierten externen Befehls zu einem entsprechenden Datenverarbeitungsmodul zur Verarbeitung, zur Anzeige eines entsprechenden Verarbeitungsergebnisses, zur Eingabe und Ausgabe von Systemdaten, und zur Durchführung von Mensch-Systemwechselwirkungen;
ein Prüfaufgabesynchronisationsmodul (22) benutzt zur Synchronisation der Prüfaufgabeinformationen im zentralen Überwachungsuntersystem mit dem lokalen Zustand, zur Ausführung von Abfrage und Zustandsbeibehaltung auf dem Prüfaufgabe, die mit den lokalen Zustand synchronisiert ist, und zur Einstellung einer gegenwärtigen Prüfaufgabe, um die Synchronisation und die Verwaltung der Prüfaufgabe durchzuführen;
ein Bausteingruppesteuermodul (23) benutzt zur Überwachung und Steuerung einer Bausteingruppe auf der Flugplattform für unbemanntes Luftfahrzeug, zum Lesen von Bausteingruppeinformationen, die, jedoch nicht begrenzt auf, den Bausteinwinkel, die Akkuleistung, die Akkuspannung, den Akkustrom, die Aufnahmezeit, und den GPS-Aufnahmewert in Echtzeit, sowie zur Ausgabe eines Steuerbefehls gemäß dem externen Befehl, zur Steuerung des Bausteingruppewinkels, zur Ausführung einer Aufnahmeaktion und zum Anhalten der Aufnahmeaktion, um die Bausteingruppe auf der Flugplattform für unbemanntes Luftfahrzeug zu überwachen;
ein GIS-Modul (24) benutzt zur Einfuhr, Ausfuhr und Anzeige der Übertragungsleitungsinformationen der Prüfaufgabe, zum Vorsehen von Rasterbildauswahl- und GPS-Positionspositionierungsvorgängen der GIS-Karte, und zum Vorsehen einer Kalibrierungsvorgangsfunktion eines GPS-Positionspunktes auf der GIS-Karte;
ein Flugsteuermodul (25) benutzt zur Überwachung und Steuerung der Zustandsinformationen der Flugplattform für unbemanntes Luftfahrzeug, zum Lesen der GPS-Informationen, der Geschwindigkeit, der Höhe, der Drehgeschwindigkeit, des gesamten Abstands, der Zylindertemperatur, der Akkuspannung, des Akkustroms und der Akkuleistungsinformationen der Flugplattform für unbemanntes Luftfahrzeug in Echtzeit, und zur Ausgabe eines Befehls zur Flugplattform für unbemanntes Luftfahrzeug gemäß dem externen Befehl, um die Flugplattform für unbemanntes Luftfahrzeug zu steuern.
ein Flugaufgabeplanungsmodul (26) benutzt zur Planung von Abflug/Landungspunkten, eines Aufhängepunktes, von Trackpunkten, einer entsprechenden Flughöhe, einer Fluggeschwindigkeit, und eines Leitungsabstandes der Prüfung durch unbemannte Luftfahrzeuge auf der GIS-Karte gemäß den Übertragungsleitungsinformationen, den geografischen Umgebungsinformationen und den meteorologischen Umgebungsinformationen der Prüfung durch unbemannte Luftfahrzeuge, zur Erzeugung einer entsprechenden Flugstrecke, und zur Ausführung von Abfrage-, Durchsuchungs-, Löschungs-, Einfuhr- und Ausfuhrvorgängen auf den Flugaufgabeformationen des unbemannten Luftfahrzeuges, um die Verwaltung und den Plan der Flugaufgabe durchzuführen;
ein Fehlervordiagnosemodul (27) benutzt zur Überarbeitung und Spleißung von Bildern, zum Herausfiltern von Bildern mit einem potentiellen Fehlermöglichkeit, zur Identifizierung der Fehlerinformationen und der Fehlpositionsinformationen in Bildinformationen, und zur Ausführung von Identifikations-, Änderungs-, Löschungs-, Abfrage- und Durchsuchungsvorgängen auf den entsprechenden Fehlerinformationen, um die Fehlerdiagnose und Verwaltung des Prüfergebnisses durchzuführen;
ein Bildvorverarbeitungsmodul (28) benutzt zur Vorverarbeitung und Verwaltung der geprüften Bildinformationen, zur Ausführung von Durchsuchungs-, Überarbeitungs-, Auswahl- und Vorverarbeitungsvorgängen auf den entsprechenden Fehlerinformationen, zum Herausfiltern von Bildern mit unzureichender Aufnahmeschärfe, mangelhaftem Aufnahmewinkel und fehlerhafter Szeneauswahl aus aufgenommenen Bildern, zur Ausführung eines Entrauschungsvorgangs auf den Bildern, und zur Einstellung der Schärfe und des Kontrastes der Bilder, um die Vorverarbeitung der Bildinformationen durchzuführen;
ein meteorologisches Überwachungsmodul (29), das zur Überwachung der meteorologischen Informationen eines Prüfortes des unbemannten Luftfahrzeuges in Echtzeit benutzt ist, und mit dem Flugaufgabeüberwachungsmoduls durch eine zusammenpassende Schnittstelle verbunden ist, um die überwachten meteorologischen Informationen zum zentralen Überwachungsuntersystem zu senden.
ein Flugaufgabeüberwachungsmodul (30) benutzt zur Überwachung der Flugzustandsinformationen, der meteorologischen Informationen des Prüfortes und der GPS-Positionsinformationen, und zur Anzeige derselben im Mensch-Rechner-Wechselwirkungsmodul, sowie zur Sendung der entsprechenden Flugaufgabeüberwachungsinformationen zum zentralen Überwachungsuntersystem über ein Kommunikationsmodul;
ein Datenspeicherungsmodul (31) benutzt zur Speicherung der Systemdaten, und zur Speicherung von basischen Systemdaten des zentralen Verwaltungsuntersystems, der Prüfvorgangsdaten, der Prüfergebnisdaten und der Prüfüberwachungsdaten über die Daten, wobei die Prüfvideodaten in der Datei gespeichert sind, und der Speicherdateipfad in der Datenbank gespeichert ist;
ein GPS-Modul (32), das zur Erreichung der GPS-Positionierung der mobilen Unterstation benutzt ist, und mit dem Flugaufgabeüberwachungsmodul über eine serielle Schnittstelle verbunden ist, um die GPS-Informationen der mobilen Unterstation zum zentralen Überwachungsuntersystem zu senden; und
das Kommunikationsmodul (33) benutzt zur Verwirklichung der Datenwechselwirkung mit dem zentralen Überwachungsuntersystem, zur Synchronisierung der Prüfaufgabeinformationen vom zentralen Überwachungsuntersystem und zur Sendung der Prüfdaten und der Prüfüberwachungsdaten zum zentralen Überwachungsuntersystem, wobei das Kommunikationsmodul auch zum Lesen der Zustandsinformationen des unbemannten Flugfahrzeuges und der Prüfvideoinformationen der Flugplattform für unbemanntes Luftfahrzeug über ein Datenübertragungsmodul und ein Bildübertragungsmodul benutzt werden kann.

7. Überwachungssystem für die Energieübertragungsleitungsprüfung durch unbemannte Luftfahrzeuge nach Anspruch 6, wobei das Prüfaufgabesynchronisationsmodul (22) eine Prüfaufgabeinformationssynchronisationseinheit, eine Prüfaufgabeabfrageeinheit und eine Einstellungseinheit für eine gegenwärtige Prüfaufgabe umfasst; die Prüfaufgabeinformationssynchronisationseinheit zur Synchronisierung der Prüfaufgabeinformationen benutzt ist; die Prüfaufgabeabfrageeinheit zur Abfrage der Prüfaufgabeinformationen auf der mobilen Unterstation benutzt ist; und die Einstellungseinheit für eine gegenwärtige Prüfaufgabe zur Einstellung einer gegenwärtigen Fehlerprüfaufgabe.

8. Überwachungssystem für die Energieübertragungsleitungsprüfung durch unbemannte Luftfahrzeuge nach Anspruch 6, wobei das Flugaufgabeplanungsmodul (26) eine Flugplanungseinheit, eine Flugaufgabeinformationeneinfuhr- und -ausfuhreinheit und eine Flugaufgabeinformationsverwaltungseinheit umfasst; die Flugplanungseinheit zur Planung von Abflug/Landungspunkten, des Aufhängepunktes, der Trackpunkte, der entsprechenden Flughöhe, der Fluggeschwindigkeit und des Leitungsabstandes der Prüfung durch unbemannte Luftfahrzeuge benutzt ist; die Flugaufgabeinformationsverwaltungseinheit zur Abfrage, Durchsuchung und Löschung der Prüfaufgabeinformationen benutzt ist; und die Flugaufgabeeinfuhr- und - ausfuhreinheit zur Einfuhr und Ausfuhr einer entsprechenden Flugaufgabedatei benutzt ist.

9. Überwachungsverfahren für die Energieübertragungsleitungsprüfung durch unbemannte Luftfahrzeuge nach Anspruch 1, wobei das spezifische Flussdiagramm wie folgt ist:
erster Schritt, Prüfaufgabenzuordnung: Prüfaufgaben werden gemäß den Informationen der geprüften Übertragungsleitungen und den überwachten Zustandsinterformationen der mobilen Unterstation zugeordnet, ein Übertragungsleitungsabschnitt, eine Prüfungszeit, ein Prüfungstyp, und ein jeder Prüfaufgabe entsprechendes Prüfungsziel werden bestimmt, und Prüfpersonal und Prüfausrüstung werden für jede Prüfaufgabe konfiguriert. Die Überwachung der Zustandsinformationen der mobilen Unterstation im Stadium überwacht die GPS-Positionsinformationen der mobilen Unterstation, die Integrität der Ausrüstung der mobilen Station, den vollen Umfang der Besatzung und dergleichen, um die entsprechende Aufgabe zuzuordnen;
zweiter Schritt, Ausführung der Prüfaufgabe: entsprechende Prüfaufgabeinformationen werden geprüft, und die geprüften Prüfaufgabeinformationen werden zur entsprechenden mobilen Unterstation zur Ausführung der entsprechenden Prüfaufgabe ausgegeben; im Prüfaufgabestadium, wird die Ausführungsbedingung der Prüfaufgabe in einem drahtlosen Modus überwacht, und der Ausrüstungszustand der mobilen Unterstation, die GPS-Positionsinformationen und werden die meteorologische Umgebungsinformationen des Ortes der mobilen Unterstation überwacht;
dritter Schritt, neue Erstellung einer Flugaufgabe: die mobile Unterstation plant die Flugaufgabe dem Prüfaufgabe entsprechend gemäß den ausgegebenen Prüfaufgabeinformationen, und bestimmt, dass die Prüfaufgabe die erforderliche Flugaufgabe durchführt und eine Prüfaufgabe einer Abflug/ Landungs-Flugprüfung des Flugzeuges entspricht; und in der Neueinstellung der Flugaufgabe, sollten der Prüfungsmast und der Übertragungsleitungsabschnitt, der der Flugaufgabe entspricht, und die Überwachungsausrüstung, die der Flugaufgabe entspricht, bestimmt werden, ist eine entsprechende Flugstrecke geplant, und, wenn die Flugstrecke vorhanden ist, wird sie unmittelbar eingeführt;
vierter Schritt, Ausführung der Flugaufgabe: die mobile Unterstation sendet die Flugstreckeninformationen in der auszuführenden Flugaufgabe zum Flugsteuermodul , und das unbemannte Luftfahrzeug wird zur Ausführung der Flugaufgabe gestartet; im Prüfvorgang wird die Flugaufgabe überwacht, und werden der Flugzustand, die Bausteingruppe, der Flugtrack und die meteorologischen Informationen vor allem überwacht;
fünfter Schritt, Flugaufgabedurchführung: entsprechende Prüfergebnisinformationen werden in die mobile Unterstation eingeführt, die Prüfbildinformationen werden vorverarbeitet, ein Flugbericht wird in Verbindung mit Flugvorgangsinformationen erzeugt, der Flugbericht, die Flugergebnisdaten, die Flugvorgangsdaten und die Flugüberwachungsdaten werden zum zentralen Überwachungsuntersystem gesendet, und die Flugüberwachungsdaten werden zum zentralen Überwachungsuntersystem in Echtzeit übertragen.
sechster Schritt, Prüfaufgabedurchführung: das zentrale Überwachungsuntersystem führt Prüffehlerdiagnosen auf den Prüfergebnisdaten und den hauptsächlichen Prüfbildinformationen aus zur Bestimmung der Prüffehler; es überprüft und diagnostiziert die vor allem in dem Flugbericht angegebenen Fehler; es prüft den Fertigstellungsgrad der Prüfaufgabe, und gewährleistet, dass der Fertigstellungsgrad der Prüfaufgabe 100% ist;
siebter Schritt, Prüfergebnisverarbeitung; und
achter Schritt, Prüfaufgabeabschluss: das zentrale Verwaltungsuntersystem erzeugt einen entsprechenden Prüfbericht gemäß Prüfvorgangsinformationen, Ergebnisinformationen und Fehlerinformationen, und stellt Prüfvorgangsbeschreibungen und Prüfergebnisbeschreibungen zur Verfügung, und das zentrale Verwaltungsuntersystem führt Fehlerbeseitigungen auf den Prüffehlern im entsprechenden Fehlerbericht aus und gibt ein Fehlerbeseitigungsergebnis im Prüfbericht wieder.

10. Überwachungsverfahren für die Energieübertragungsleitungsprüfung durch unbemannte Luftfahrzeuge nach Anspruch 9, wobei das spezifische Flussdiagramm wie folgt ist:
erster Schritt, Bildvorverarbeitung: Informationen von Aufnahmekopien im Prüfbericht werden vorverarbeitet, Bilder mit unzureichender Aufnahmeschärfe, mangelhaftem Aufnahmewinkel und fehlerhafter Szeneauswahl werden aus aufgenommenen Bildern herausgefiltert, ein Entrauschungsvorgang wird auf den Bildern ausgeführt, und die Schärfe und der Kontrast der Bilder werden eingestellt;
zweiter Schritt, Fehlerdiagnose: ein Fehlermuster, das gemäß der Fehlerexpertendatenbank vorgesehen wird, wird diagnostiziert, es wird bestimmt, ob die Informationen in den Bildern Fehler aufweisen, eine Fehlerschicht wird dem Bild hinzugefügt, die Fehler werden auf einer neuen Bildschicht durch Quadrate oder Kreise und Zeichendarstellung identifiziert, und ein Diagnoseergebnis wird in der Datenbank gespeichert; und
dritter Schritt, manuelle Fehlerverarbeitung: eine manuelle Bestätigung wird auf den in der Datenbank gespeicherten Informationen ausgeführt zur Bestimmung, ob die Fehler diagnostiziert werden, und Reidentifikations-, Löschungs-, Änderungs- und Durchsuchungsvorgänge werden auf entsprechenden Fehlern ausgeführt; und Bildverwaltung wird zur Durchsuchung der ursprünglichen Bildinformationen und zur Identifizierung der manuell gefundenen Fehler ausgeführt.

## Revendications

1. Système de surveillance pour l'inspection d'une ligne de transmission par véhicules aériens sans pilote (3), comprenant une sous-station mobile (2) et une plateforme de vol de véhicule aérien sans pilote (3), système dans lequel la sous-station mobile (2) est connectée à la plateforme de vol de véhicule aérien sans pilote (3);
la sous-station mobile (2) est utilisée pour planifier et émettre une tâche de vol, pour exécuter une surveillance locale sur les informations de l'état de l'inspection et sur les données d'inspection, pour prétraiter des données d'image d'inspection et pour exécuter un pré-diagnostic de défaut sur les données de résultat d'inspection; et
une plateforme de vol de véhicule aérien sans pilote (3) comprend un module formant boîtier (4) servant de terminal de détection de ligne, un module de commande de vol (5) pour exercer une commande de vol sur la plateforme de vol de véhicule aérien sans pilote (3), un module GPS (6) pour exécuter un positionnement GPS, un module de communication (7) pour communiquer avec la sous-station mobile (2) et un fuselage de véhicule aérien sans pilote; le module de commande de vol (5), module formant boîtier (4) et le module GPS (6) communiquent respectivement avec la sous-station mobile par l'intermédiaire de liens de transmission de données, et le module formant boîtier (6) émet des informations de détection d'image dans la sous-station mobile (2) par l'intermédiaire d'un lien de communication de transmission d'image, **caractérisé en ce que** le système de surveillance comprend des sous-stations mobiles (2) et des plateformes de vol de véhicule aérien sans pilote (3), les sous-stations mobiles (2) étant connectées aux plateformes de vol de véhicule aérien sans pilote (3) dans un mode seul à seul et à un sous-système de surveillance centralisée, où le sous-système de surveillance centralisée (1) est connecté aux sous-stations mobiles (2) dans un mode seul à plusieurs, et le sous-système de surveillance centralisée (1) est utilisé pour accéder aux informations d'état et aux données d'inspection de la sous-station mobile (2) et à la plateforme de vol de véhicule aérien sans pilote (3), pour planifier et synchroniser une tâche d'inspection par véhicule aérien sans pilote, pour exécuter une surveillance à distance en temps réel sur la station mobile (2) et sur la plateforme de vol de véhicule aérien sans pilote (3) pour l'inspection par véhicule aérien sans pilote, pour exécuter des diagnostic des défauts, des statistiques, des analyses et affichages sur des données d'inspection, et pour décrire une scène d'état en temps réel et un environnement de puissance électrique de l'inspection par véhicule aérien sans pilote.

2. Système de surveillance pour l'inspection d'une ligne de transmission par véhicules aériens sans pilote (3) selon la revendication 1, dans lequel le sous-système de surveillance centralisée (1) comprend:
un module d'interaction entre humain et ordinateur (8), utilisé pour obtenir et analyser une instruction extérieure, pour émettre l'instruction extérieure analysée à un module de traitement de données correspondant pour traiter, et afficher un résultat de traitement correspondant;
un module de planification de tâches d'inspection (9), utilisé pour exécuter une division de tâches sur une ligne de transmission inspectée par le véhicule aérien sans pilote, pour déterminer les tronçons de ligne de transmission inspectés par les jeux de machines d'inspection, l'équipement d'inspection nécessaire et l'équipe d'inspection et pour spécifier le temps d'inspection planifié selon les facteurs d'influence comprenant la fiabilité de l'équipement d'inspection, les rapports d'inspection du personnel, l'environnement géographique d'inspection et l'environnement météorologique, pour exécuter des opérations de requête, de construction nouvelle, d'édition, d'audit, de notification et d'émission sur la tâche d'inspection planifiée afin de réaliser le plan de la tâche d'inspection;
un module de surveillance de tâche d'inspection (19) utilisé pour surveiller les informations de l'environnement météorologique d'un site d'inspection par véhicule aérien sans pilote, les informations d'état de vol du véhicule aérien sans pilote, les informations d'état de la sous-station mobile, les informations de position GPS, les informations de commande de boîtier et d'autres informations d'état en temps réel et des informations d'environnement de puissance électrique, et pour décrire la scène d'état en temps réel et l'environnement de puissance électrique de l'inspection en cours par le véhicule aérien sans pilote en modes vidéo et image;
un module de gestion de résultats d'inspection (14), utilisé pour gérer les données de résultats d'inspection du véhicule aérien sans pilote, est connecté à un module de communication et à un module de stockage de données afin d'effectuer une synchronisation, une navigation, un jeu, une comparaison, une analyse et une gestion de rapports des données de résultats d'inspection, et pour réaliser la gestion des données de résultats d'inspection;
un module de diagnostic de défaut d'inspection (15) utilisé pour réaliser la sélection, le prétraitement et le diagnostic de défaut sur les données de résultats d'inspection qui comprennent les informations d'image et de vidéo, pour marquer une position de défaut sur une image d'inspection, pour illustrer le défaut en caractères, pour stocker le défaut d'inspection dans une base de données, et pour exécuter des opérations d'identification, de modification, de suppression, de requête et de navigation sur l'image de défaut d'inspection correspondante afin de réaliser le diagnostic de défaut du résultat d'inspection;
un module de gestion de rapports d'inspection (16) utilisé pour générer un rapport de tâche d'inspection de la tâche d'inspection par véhicule aérien sans pilote, pour décrire la ligne de transmission, l'équipement, le personnel, le temps, le rapport de tâche de vol et les information de carnet de vol de la tâche d'inspection correspondante et les informations du défaut trouvé, et pour exécuter des opérations de navigation, d'édition, de suppression et d'audit sur le rapport d'inspection afin de réaliser la gestion du rapport d'inspection;
un module d'élimination de défaut (18) utilisé pour traiter les informations de défaut d'inspection dans le rapport d'inspection, pour déclencher un flux d'élimination de défaut au moyen des défauts dans la ligne de transmission inspectée, et pour exécuter des opérations d'émission, de répartition, de communication, d'élimination et de confirmation d'élimination sur une tâche d'élimination de défaut afin de réaliser une opération d'élimination des défauts d'inspection trouvés par l'inspection par véhicule aérien sans pilote;
un module GIS (12) utilisé pour importer et exporter des informations de ligne de transmission, dans lequel les informations de ligne de transmission sont affichées dans le module GIS, des opérations de division en tronçons, de sélection et de sélection de trame de la ligne de transmission sont prévues, et le module GIS peut être utilisé pour naviguer, éditer et supprimer des informations de ligne correspondantes sur la carte GIS, ainsi que pour afficher des informations d'itinéraire de vol du véhicule aérien sans pilote sur la carte GIS;
le module de communication (20) utilisé pour lire en temps réel les informations d'état de la sous-station mobile, pour répondre à une instruction à distance de module d'interaction entre humain et ordinateur, pour émettre les informations de tâche d'inspection vers la station mobile, pour obtenir les informations d'inspection de la station mobile et de la plateforme de vol de véhicule aérien sans pilote en temps réel, et pour réaliser l'interaction d'informations et la communication du sous-système de surveillance centralisée et de la sous-station mobile;
un module de gestion de ligne de transmission (13) utilisé pour exécuter des opérations d'import, d'export, de requête, de navigation, de suppression et d'édition sur une position GPS de pylône, un numéro de modèle de pylône, une hauteur de pylône, un numéro de série de pylône initial, des numéros de série de pylône et d'autres informations de la ligne de transmission afin de réaliser la gestion des informations de la ligne de transmission;
un module de gestion de personnel d'inspection (11) utilisé pour exécuter la gestion des requêtes, de la maintenance, de l'enregistrement et de la suppression sur des informations de base de personnel de l'équipe d'inspection et d'un gestionnaire de tâche d'inspection par l'intermédiaire d'informations de carte d'identité, pour réaliser des requêtes et affichages automatiques d'informations de personnel par l'intermédiaire d'un lecteur de cartes d'identité, et pour exécuter des opérations de requête, de navigation, d'édition et de suppression sur des informations de rapport d'inspection de l'équipe d'inspection afin de réaliser la gestion des informations de personnel d'inspection;
un module de gestion d'équipement d'inspection (10) utilisé pour gérer des informations d'équipement d'inspection, pour exécuter des opérations de opérations d'import, d'export, de requête, de navigation, d'enregistrement, de maintenance et de suppression sur des informations d'équipement, pour maintenir les informations d'état de l'équipement d'inspection comprenant l'usage inactif, l'usage d'inspection, l'état de maintenance ou d'entretien, et pour réaliser une gestion et utilisation efficaces de l'équipement d'inspection;
le module de stockage de données (17) utilisé pour stocker des données de système selon le mode d'une base de données et d'un fichier, dans lequel le module de stockage de données est utilisé pour stocker des données de base de système d'un sous-système de gestion centralisée, les données de processus d'inspection, des données de résultat d'inspection et des données de surveillance d'inspection, et des données vidéo d'inspection sont stockées dans un fichier, et un chemin de fichier est stocké dans la base de données.

3. Système de surveillance pour l'inspection d'une ligne de transmission par véhicules aériens sans pilote selon la revendication 2, dans lequel,
le module de planification de tâches d'inspection (9) comprend une unité de planification des tâches d'inspection, une unité de gestion des tâches d'inspection et une unité de synchronisation des informations de tâche d'inspection; l'unité de planification des tâches d'inspection (9) est connectée au module de gestion d'équipement d'inspection (10), au module de gestion de personnel d'inspection (11), au module GIS (12) et au module de gestion de ligne de transmission, et est utilisée pour planifier la ligne de transmission inspectée, l'équipement, le personnel et le véhicule aérien sans pilote sur une carte GIS, et pour déterminer les facteurs d'inspection; l'unité de gestion de tâches d'inspection est connectée à l'unité de planification des tâches d'inspection et est utilisée pour gérer la tâche d'inspection planifiée; et l'unité de synchronisation des informations de tâche d'inspection est connectée à l'unité de gestion des tâches d'inspection et est utilisée pour synchroniser les informations sélectionnées de tâche d'inspection par véhicule aérien sans pilote par rapport à la sous-station mobile correspondante.

4. Système de surveillance pour l'inspection d'une ligne de transmission par véhicules aériens sans pilote selon la revendication 2, dans lequel le module de surveillance des tâches d'inspection (19) comprend une unité de surveillance de station mobile, une unité de surveillance d'état de vol, une unité de surveillance de boîtier et une unité de surveillance d'environnement météorologique, l'unité de surveillance de sous-station mobile est utilisée pour surveiller les informations GPS de la sous-station mobile, pour enregistrer le suivi de mouvement de la station mobile sur la carte GIS et enregistrer ses suivis de mouvement historiques; l'unité de surveillance d'état de vol est utilisée pour surveiller les informations d'état du véhicule aérien sans pilote comprenant les coordonnées GPS de vol, la vitesse, l'altitude, la vitesse de rotation, la distance totale, la température de cylindre, la tension de batterie, le courant de batterie et la puissance de batterie; l'unité de surveillance de boîtier est utilisée pour surveiller l'angle de boîtier de vol, le temps de prise de vues, et les informations de position GPS de prise de vues du véhicule aérien sans pilote; et l'unité de surveillance d'environnement météorologique est utilisée pour afficher les informations d'environnement météorologique comprenant les informations de température, d'humidité, de vitesse du vent, de la densité de l'air et d'altitude.

5. Système de surveillance pour l'inspection d'une ligne de transmission par véhicules aériens sans pilote selon la revendication 2, dans lequel le module de diagnostic de défaut d'inspection (15) comprend une base de données spécialisée, une unité de diagnostic de défaut, une unité de prétraitement d'image et une unité de gestion de défaut, où l'unité de prétraitement d'image est utilisée pour prétraiter les informations d'image, pour exécuter une définition et une identification de précision de sélection de scènes sur une image d'inspection originale, pour supprimer des images présentant une définition insuffisante et une sélection de scènes imprécise, et pour raccorder et éditer des images de diagnostic; la banque de données spécialisée est utilisée pour intégrer des bibliothèques de caractéristiques de défauts de ligne de transmission, est connectée à l'unité de diagnostic de défauts, et est utilisée pour exécuter une analyse comparative sur une image prétraitée et la base de données spécialisée de défauts, pour analyser les défauts de ligne de transmission et pour identifier des défauts correspondants sur l'image selon le mode d'identification de position et d'illustration de caractères; l'unité de diagnostic de défauts est utilisée pour stocker les défauts diagnostiqués dans le module de stockage de données; et l'unité de gestion de défauts est utilisée pour réaliser l'identification, la modification, la suppression, la requête et la navigation de l'image du défaut.

6. Système de surveillance pour l'inspection d'une ligne de transmission par véhicules aériens sans pilote selon la revendication 1 ou 2, dans lequel la sous-station mobile (2) comprend:
un module d'interaction entre humain et ordinateur (21) utilisé pour obtenir et analyser une instruction extérieure, pour émettre l'instruction extérieure analysée vers un module de traitement de données correspondant afin de traiter, pour afficher un résultat de traitement correspondant, pour entrer et sortir des données de système, et pour réaliser une interaction entre humain et système;
un module de synchronisation de tâches d'inspection (22) utilisé pour synchroniser les informations de tâches d'inspection dans le sous-système de surveillance centralisée par rapport à la situation locale, pour exécuter une requête et une maintenance d'état sur la tâche d'inspection qui est synchronisée par apport à la situation locale, et pour ajuster une tâche d'inspection en cours afin de réaliser la synchronisation et la gestion des informations de tâche d'inspection;
un module de commande de boîtier (23) utilisé pour surveiller et commander un boîtier sur la plateforme de vol de véhicule aérien sans pilote, pour lire des informations de boîtier qui comprennent, sans y être limitées, l'angle de boîtier, la puissance de batterie, la tension de batterie, le courant de batterie, le temps de prise de vue et la valeur GPS de prise de vues en temps réel, ainsi que pour émettre une instruction de commande selon l'instruction externe, pour régler l'angle de boîtier, pour exécuter une action de prise de vues et pour arrêter l'action de prise de vues de façon à surveiller le boîtier sur la plateforme de vol de véhicule aérien sans pilote;
un module GIS (24) utilisé pour importer, exporter et afficher des informations de ligne de transmission de la tâche d'inspection, pour procurer des opérations de sélection de trame et de positionnement de positions GPS sur la carte GIS, et pour procurer une fonction d'opérations de calibrage d'un point de position GPS sur la carte GIS;
un module de commande de vol (25) utilisé pour surveiller et régler les informations d'état de la plateforme de vol de véhicule aérien sans pilote, pour lire les informations GPS, la vitesse, l'altitude, la vitesse de rotation, la distance totale, la température de cylindre, la tension de batterie, le courant de batterie et les informations de puissance de batterie de la plateforme de vol de véhicule aérien sans pilote en temps réel, et pour émettre une instruction vers la plateforme de vol de véhicule aérien sans pilote selon l'instruction extérieure afin de commander la plateforme de vol de véhicule aérien sans pilote;
un module de planification de tâches de vol (26) utilisé pour planifier des points de décollage/atterrissage, une altitude de vol correspondante, une vitesse de vol et une distance de ligne de l'inspection par véhicule aérien sans pilote sur la carte GIS selon les informations de transmission de ligne, les informations d'environnement géographique et les informations d'environnement météorologique de l'inspection par véhicule aérien sans pilote, pour générer un itinéraire de vol correspondant, et pour exécuter des opérations de requête, de navigation, de suppression, d' import et d'export sur les informations de tâche de vol du véhicule aérien sans pilote afin de réaliser la gestion et le plan de la tâche de vol;
un module de pré-diagnostic de défaut (27) utilisé pour éditer et raccorder des images, pour écarter des images présentant une possibilité de défaut potentiel, pour identifier les informations de défaut et les informations de position de défaut, et pour exécuter des opérations d'identification, de modification, de suppression, de requête et de navigation sur les informations de défaut correspondantes afin de réaliser le diagnostic de défaut et la gestion du résultat d'inspection;
un module de prétraitement d'image (28) utilisé pour prétraiter et gérer les informations d'image inspectée, pour exécuter des opérations de navigation, d'édition, de sélection et de prétraitement sur les informations de défaut correspondantes, pour éliminer des images présentant une définition de prise de vue insuffisante, un angle de prise de vue imprécis et une sélection de scènes imprécise parmi les images prises, pour exécuter un traitement de débruitage sur les images, et pour ajuster la définition et le contraste des images afin de réaliser le prétraitement des informations d'image;
un module de surveillance météorologique (29) qui est utilisé pour surveiller les informations météorologique d'un site d'inspection du véhicule aérien sans pilote en temps réel, et est connecté au module de surveillance de tâche de vol par une interface compatible afin d'émettre les informations météorologiques surveillées au sous-système de surveillance centralisée;
un module de surveillance de tâche de vol (30) utilisé pour surveiller les informations d'état de vol, les informations météorologiques du site d'inspection et les informations de position GPS, et pour afficher les mêmes informations dans le module d'interaction entre humain et ordinateur, ainsi que pour émettre les informations de surveillance de d'état de vol correspondantes vers le sous-système de surveillance centralisée au moyen d'un module de communication;
un module de stockage de données (31) utilisé pour stocker les données de système, et pour stocker les données de base de système du sous-système de gestion centralisée, les données de processus d'inspection, les données de résultat d'inspection et les données de surveillance d'inspection par l'intermédiaire des données, où les données vidéo d'inspection sont stockées dans le fichier, et le chemin de fichier de stockage est stocké dans la base de données;
un module GPS (32) qui est utilisé pour réaliser le positionnement GPS de la sous-station mobile, et est connecté au module de surveillance de tâche de vol par l'intermédiaire d'un port série afin d'émettre les informations GPS de la sous-station mobile vers le sous-système de surveillance centralisée; et
le module de communication (33) utilisé pour réaliser l'interaction de données avec le sous-système de surveillance centralisée, pour synchroniser les informations de tâche d'inspection en provenance du sous-système de surveillance centralisée et pour émettre les données d'inspection et les données de surveillance d'inspection vers le sous-système de surveillance centralisée, où le module de communication peut également être utilisé pour lire les informations d'état de véhicule aérien sans pilote et les informations vidéo d'inspection de la plateforme de vol de véhicule aérien sans pilote par l'intermédiaire d'un module de transmission de données et d'un module de transmission d'images.

7. Système de surveillance pour l'inspection d'une ligne de transmission par véhicules aériens sans pilote selon la revendication 6, dans lequel le module de synchronisation de tâches d'inspection (22) comprend une unité de synchronisation d'informations de tâches d'inspection, une unité de requêtes de tâches d'inspection et une unité d'ajustement de tâche d'inspection en cours; le module de synchronisation de tâches d'inspection (22) est utilisé pour synchroniser les informations de tâches d'inspection, l'unité de requête de tâches d'inspection est utilisée pour requérir les informations de tâches d'inspection sur la sous-station mobile; et l'unité d'ajustement de tâches d'inspection en cours est utilisée pour ajuster une tâche d'inspection de défaut en cours.

8. Système de surveillance pour l'inspection d'une ligne de transmission par véhicules aériens sans pilote selon la revendication 6, dans lequel le module de planification de tâches de vol (26) comprend une unité de planification de vol, une unité d'import et d'export d'informations de tâches de vol et une unité de gestion d'informations de tâches de vol; l'unité de planification de vol est utilisée pour planifier les points d'atterrissage/décollage, le point de suspension, les points de parcours, l'altitude de vol correspondante, la vitesse de vol et la distance de ligne du véhicule d'inspection aérien sans pilote; l'unité de gestion d'informations de tâches de vol est utilisée pour requérir, naviguer et supprimer les informations de tâches de vol; et l'unité d'import et d'export de tâches de vol est utilisée pour importer et exporter un fichier de tâches de vol correspondant.

9. Procédé de surveillance pour l'inspection d'une ligne de transmission par véhicules aériens sans pilote selon la revendication 1, dans lequel le schéma spécifique est le suivant:
première étape, attribution de tâches d'inspection: des tâches d'inspection sont attribuées selon les informations des lignes de transmission inspectées et les informations d'état surveillé de la sous-station surveillée, un tronçon de ligne de transmission, un temps d'inspection, un type d'inspection et un objectif d'inspection correspondant à chaque tâche d'inspection sont déterminés, et des personnel et équipement d'inspection sont configurés pour chaque tâche d'inspection. La surveillance concernant les informations d'état de la sous-station mobile à ce stade surveille les informations de position GPS de la sous-station mobile, l'intégrité de l'équipement de la sous-station mobile, l'état complet de l'équipe et des choses semblables, de façon à attribuer la tâche d'inspection correspondante;
deuxième étape: exécution des tâches d'inspection: des informations de tâche d'inspection sont vérifiées, et les informations de tâches d'inspection sont émises vers la sous-station mobile correspondante afin d'exécuter la tâche d'inspection correspondante; au stade d'exécution de la tâche d'inspection, la condition d'exécution de la tâche d'inspection est surveillée selon un mode de communication sans fil, et l'état d'équipement de la sous-station mobile, les informations de position GPS et les informations environnementales météorologiques du site de sous-station mobile sont surveillés;
troisième étape, nouvelle réalisation d'une tâche de vol: la sous-station mobile planifie la tâche de vol correspondant à la tâche d'inspection selon les informations de tâche d'inspection émises, et détermine que la tâche d'inspection réalise la tâche de vol nécessaire et qu'une tâche de vol correspond à une inspection de vol de décollage/atterrissage de l'avion; et dans la nouvelle réalisation de la tâche de vol, le pylône d'inspection et le tronçon de la ligne de transmission correspondant à la tâche de vol, et un équipement de surveillance correspondant devraient être déterminés, un itinéraire de vol correspondant est planifié, et si l'itinéraire de vol est existant, il est directement importé;
quatrième étape, l'exécution de la tâche de vol: la station mobile émet les informations d'itinéraire de vol dans la tâche de vol à exécuter vers le module de réglage de vol, et le véhicule aérien sans pilote est démarré afin d'exécuter la tâche de vol; dans le processus d'inspection, la tâche de vol est surveillée, et l'état de vol, l'état de boîtier, le parcours de vol et les informations météorologiques sont principalement surveillés;
cinquième étape, réalisation de la tâche de vol: des données de résultat d'inspection correspondantes sont importées dans la sous-station mobile, les informations d'images d'inspection sont prétraitées, un rapport de vol est généré en combinaison avec les informations de processus de vol, le rapport de vol, les données de résultat de vol, les données de processus de vol et les données de surveillance de vol sont émises vers le sous-système de surveillance centralisée, et les données de surveillance de vol sont transmises au sous-système de surveillance centralisée en temps réel;
sixième étape, réalisation de la tâche d'inspection: le sous-système de surveillance centralisée réalise le diagnostic de défaut d'inspection sur les données de résultat d'inspection et sur les informations principales d'image d'inspection afin de déterminer les défauts d'inspection; il vérifie et diagnostique les défauts procurés principalement dans le rapport de vol; il contrôle le degré d'achèvement de la tâche d'inspection, et assure que le degré d'achèvement de la tâche d'inspection est de 100%;
septième étape, traitement des résultats de l'inspection; et
huitième étape, clôture de la tâche d'inspection: le sous-système de surveillance centralisée génère un rapport d'inspection correspondant selon des informations de processus d'inspection, des informations de résultat, et des informations de défaut, et procure une description du processus d'inspection et une description des résultats d'inspection; et le sous-système de surveillance centralisée exécute une élimination de défauts sur des défauts d'inspection dans le rapport d'inspection correspondant et intègre un résultat d'élimination de défauts dans le rapport d'inspection.

10. Procédé de surveillance pour l'inspection d'une ligne de transmission par véhicules aériens sans pilote selon la revendication 9, dans lequel le schéma de traitement du résultat d'inspection est le suivant:
première étape, prétraitement des images: des informations de copie d'image prise dans le résultat d'inspection sont prétraitées, des images présentant une définition de prise de vue insuffisante, un angle de prise de vue erroné et une sélection inexacte de scènes parmi les images prises sont éliminés, un traitement de débruitage est exécuté sur les images, et la définition et le contraste des images sont ajustés;
seconde étape, diagnostic des défauts: un échantillon de défaut qui est fourni selon la banque de données spécialisée est diagnostiqué, il est déterminé si les informations dans les images présentent des défauts, une couche de défaut est ajoutée à l'image, les défauts sont identifiés sur une nouvelle couche d'image par des carrés ou des cercles et par une illustration de caractère, et un résultat de diagnostic est enregistré dans la base de données: et
troisième étape, traitement manuel des défauts: une confirmation manuelle est exécutée sur les informations de défaut enregistrées dans la base de données afin de déterminer si les défauts sont diagnostiqués, et des opérations de ré-identification, de suppression, de modification et de navigation sont exécutées sur des défauts correspondants; et une gestion d'images est exécutée afin de naviguer sur les informations d'image originale et d'identifier les défauts trouvés manuellement.
